# EUROPEAN PATENT APPLICATION

(11) **EP 4 746 390 A1**
(43) Date of publication of application: **20.05.2026**
(21) Application number: 24884348.4
(22) Date of filing: 29.09.2024
(51) Int. Cl.: H04M 1/02

(54) **WALLPAPER SETTING METHOD FOR FOLDABLE SCREEN DEVICE AND FOLDABLE SCREEN DEVICE**

(30) Priority: 01.11.2023 CN 202311446419
(71) Applicant: Huawei Technologies Co., Ltd., Shenzhen, Guangdong 518129 (CN)
(72) Inventor: PENG, Caihong, Shenzhen, Guangdong 518129 (CN); JIA, Fei, Shenzhen, Guangdong 518129 (CN); JI, Yifan, Shenzhen, Guangdong 518129 (CN)
(74) Representative: Goddar, Heinz J.
(86) International application number: PCT/CN2024/122537
(87) International publication number: WO 2025/092343

(57) **Abstract**

Embodiments of this application are applicable to the field of terminal technologies, and provide a wallpaper setting method for a foldable screen device and a foldable screen device. By using the method, the foldable screen device can recognize a subject in an image, and cut the image based on a location of the subject in the image and size information of various screens, to obtain a plurality of wallpaper images. Because the foldable screen device cuts the image based on sizes of the various screens, the wallpaper images obtained through cutting not only can include a feature of the subject, but also can adapt to the sizes of the various screens, thereby solving a problem in a conventional technology that when a wallpaper is set for the foldable screen device, cutting is performed along a middle of the image, which easily destroys integrity of the subject in the image; and improving aesthetics and uniformity of screen wallpapers of the foldable screen device.

## Description

This application claims priority to Chinese Patent Application No. 202311446419.5, filed with the China National Intellectual Property Administration on November 1, 2023 and entitled "WALLPAPER SETTING METHOD FOR FOLDABLE SCREEN DEVICE AND FOLDABLE SCREEN DEVICE", which is incorporated herein by reference in its entirety.

### TECHNICAL FIELD

Embodiments of this application relate to the field of terminal technologies, and in particular, to a wallpaper setting method for a foldable screen device and a foldable screen device.

### BACKGROUND

With development of technologies, a foldable screen device increasingly becomes a research focus in the industry. As the name implies, the foldable screen device is an electronic device whose screen is foldable. Folding the screen can reduce a device size and improve device portability. When the screen is unfolded, the originally folded screen may form a screen with a larger area, which facilitates use by a user. Alternatively, the user may fold the screen to a specific angle, to form different screen splitting forms, thereby enriching functions of the device.

Generally, the screen of the foldable screen device includes an outer screen and an inner screen, and a size of the outer screen is usually smaller than that of the inner screen. When in use, the inner and outer screens of different sizes may be respectively used to display different information. The user may also set wallpapers for the inner and outer screens of the foldable screen device, similar to a common electronic device. Using a folding mobile phone (folding mobile phone) as an example, when a user sets a screen wallpaper for the folding mobile phone, the screen wallpaper needs to be separately set on an outer screen and an inner screen of different sizes. Because the sizes of the inner and outer screens are different, if the foldable screen device cuts a wallpaper in a same manner, integrity and aesthetics of the wallpaper cannot be ensured. After the wallpaper is set, final effects thereof presented on the inner and outer screens may also be greatly different.

### SUMMARY

Embodiments of this application provide a wallpaper setting method for a foldable screen device and a foldable screen device, to solve a problem in the conventional technology that integrity and aesthetics of a wallpaper are affected when an inner screen wallpaper and an outer screen wallpaper of the foldable screen device are set in a same cutting manner.

To achieve the foregoing objective, this application uses the following technical solutions.

According to a first aspect, a wallpaper setting method for a foldable screen device is provided, including: recognizing a subject in an image; cutting the image based on a location of the subject in the image and size information of various screens of the foldable screen device, to obtain a plurality of wallpaper images that adapt to the various screens, where sizes of the various screens are different, and any one of the wallpaper images includes the subject; and separately setting each of the wallpaper images as a wallpaper of an adapted screen.

According to the wallpaper setting method provided in this embodiment of this application, when a wallpaper is set for the various screens of the foldable screen device, the subject in the image may be first recognized, and then the image is cut based on the location of the subject in the image and the size information of the various screens of the foldable screen device, to obtain the plurality of wallpaper images. Because each wallpaper image is obtained by cutting the subject in the image based on size information of a screen, it can be ensured that the wallpaper image obtained through cutting includes the subject in the original image, and a resolution of each wallpaper image adapts to a size of a corresponding screen. After each wallpaper image is set as a wallpaper of an adapted screen, a main feature in the original image can be retained to a maximum extent. By applying the wallpaper setting method provided in this embodiment of this application, a problem in the conventional technology that integrity of a subject in an image is easily damaged when a screen of any size is cut along a middle of the image is solved, a possibility that effects of a wallpaper image finally presented on an inner screen and an outer screen are relatively different is reduced, and aesthetics and uniformity of screen wallpapers of a foldable screen device are improved.

It should be understood that the size information may be a size, an aspect ratio, a resolution, or the like of the screen or the wallpaper image.

**In** a possible implementation of the first aspect, the cutting the image based on the location of the subject in the image and the size information of the various screens of the foldable screen device, to obtain the plurality of wallpaper images that adapt to the various screens includes: determining, based on the location of the subject in the image, an image region that is in the image and that includes the subject; and cutting the image based on the size information of the various screens of the foldable screen device to obtain the plurality of wallpaper images that adapt to the various screens. By determining a region in which the subject is located and using the region as an image region that needs to be retained, it can be ensured that the image is accurately cut in a wallpaper setting process, and the subject in the image is retained.

In a possible implementation of the first aspect, the cutting the image based on the size information of the various screens of the foldable screen device to obtain the plurality of wallpaper images that adapt to the various screens includes: determining a folding manner of the foldable screen device, where the folding manner includes horizontal folding or vertical folding, and any folding manner is corresponding to one cutting direction; and cutting the image based on a cutting direction corresponding to the folding manner to obtain a plurality of wallpaper images, where each wallpaper image obtained through cutting has a same aspect ratio as an adapted screen.

It should be understood that folding manners of different types of foldable screen devices are different, and for foldable screen devices in different folding manners, different solutions may be used to cut a wallpaper.

For example, if the folding manner of the foldable screen device is horizontal folding, the image is cut in a vertical cutting manner to obtain a wallpaper image that has a same aspect ratio as an adapted screen; or if the folding manner of the foldable screen device is vertical folding, the image is cut in a horizontal cutting manner to obtain a wallpaper image that has a same aspect ratio as the adapted screen. In this way, adaptation between the wallpaper image obtained through cutting and the corresponding screen can be improved.

In a possible implementation of the first aspect, the cutting the image based on the cutting direction corresponding to the folding manner to obtain the plurality of wallpaper images includes:
In a possible implementation of the first aspect, the various screens of the foldable screen device include a first screen whose size information is less than a preset value; and the cutting the image based on the location of the subject in the image and the size information of the various screens of the foldable screen device, to obtain the plurality of wallpaper images that adapt to the various screens further includes: determining a location of a subject part of the subject in the image; and cutting the image based on the size information of the first screen to obtain a first wallpaper image that includes the subject part of the subject and adapts to the first screen.

For example, the first screen may be an outer screen of the foldable screen device. When a wallpaper image is cut for the outer screen, if the image cannot be cut based on a size of the outer screen to obtain an image including a target feature of the subject, the foldable screen device may cut only a subject part of the subject in the image.

It should be understood that the subject may include a plurality of parts, priorities of different parts may be different, and the subject part of the subject may have a highest priority. For an outer screen of a relatively small size in the foldable screen device, the subject part of the subject in the image is retained by cutting the image, so that a main feature of the subject can be retained in the wallpaper image to a maximum extent.

In a possible implementation of the first aspect, after the recognizing the subject in the image, the method further includes: determining a central point of the subject; and determining, based on the central point, a region that is in the image and that includes a target feature of the subject as an image region that needs to be retained.

In a possible implementation of the first aspect, after the determining the region that is in the image and that includes the target feature of the subject as the image region that needs to be retained, the method further includes: displaying, on any screen of the foldable screen device, prompt box information for the image region that needs to be retained, where the prompt box information prompts adjustment of the image region that needs to be retained. When receiving an operation for prompt box information, the foldable screen device may adjust, based on the operation, a size and/or a location of the image region that needs to be retained.

The target feature of the subject herein may represent all features of the entire subject (which may also be referred to as a complete feature of the subject), a feature recognizing a part of a highlighted part of the subject (which may also be referred to as a complete feature of a part of the subject), or the like.

It should be understood that the image region that needs to be retained and that is determined by the foldable screen device based on an algorithm may not be an image region that the user actually wants to retain. By displaying a prompt box on the screen, the user may be prompted to adjust the image region that needs to be retained. For example, the image region that needs to be retained is increased or decreased, or a location of the image region that needs to be retained is adjusted. In this way, the user adjusts the image region that needs to be retained, so that the wallpaper finally set on each screen can better meet an expectation of the user.

In a possible implementation of the first aspect, the subject may include a first subject and a second subject, and the foldable screen device may include a first screen and a second screen, where a size of the first screen is less than that of the second screen. The cutting the image based on the location of the subject in the image and the size information of the various screens of the foldable screen device, to obtain the plurality of wallpaper images that adapt to the various screens includes: separately determining priorities of the first subject and the second subject; and when the priority of the first subject is higher than the priority of the second subject, cutting the image based on a location of the first subject in the image and the size information of the various screens of the foldable screen device, to obtain a first wallpaper image that adapts to the first screen, and cutting the image to obtain a second wallpaper image that adapts to the second screen, where the first wallpaper image includes the first subject.

For example, the first screen may be an outer screen of the foldable screen device, and the second screen may be an inner screen of the foldable screen device. In a case in which the image includes a plurality of subjects, the foldable screen device may cut the image based on priorities of the plurality of subjects, so that each wallpaper image obtained through cutting includes a first subject with a highest priority in the subjects.

In a possible implementation of the first aspect, the cutting the image based on the location of the first subject in the image and the size information of the various screens of the foldable screen device, to obtain the first wallpaper image that adapts to the first screen includes: determining, based on the location of the first subject in the image, a first image region including the first subject; and cutting the image based on size information of the first screen to obtain the first wallpaper image including the first image region, where the first wallpaper image and the first screen have a same aspect ratio.

In another possible implementation of the first aspect, the cutting the image to obtain the second wallpaper image that adapts to the second screen includes: determining a second image region based on locations of the first subject and the second subject in the image, where the second image region includes the first subject and the second subject; and cutting the image based on size information of the second screen to obtain the second wallpaper image including the second image region, where the second wallpaper image and the second screen have a same aspect ratio.

In this way, when there are a plurality of subjects, the image is cut based on priorities of the subjects, so that when a screen size is relatively small, it can be preferentially ensured that a wallpaper obtained through cutting includes a subject with a high priority. For a screen with a relatively large size, more other subjects may be included on this basis, and more image features in the original image are retained as much as possible.

In a possible implementation of the first aspect, the cutting the image based on the size information of the first screen to obtain the first wallpaper image including the first image region includes: determining a ratio deviation between the size of the first screen and a size of the first image region; and if the ratio deviation is greater than a preset deviation value, determining a location of a subject part of the first subject in the first image region; and cutting the first image region based on the size information of the first screen to obtain the first wallpaper image including the subject part of the first subject.

It should be understood that the ratio deviation may be used to represent a degree of adaptation between the size of the first screen and the size of the first image region, and the ratio deviation may be determined by using an aspect ratio of the first screen or the first image region. When the ratio deviation is relatively small, the degree of adaptation between the size of the first screen and the size of the first image region is relatively high. When the ratio deviation is relatively large, the degree of adaptation between the size of the first screen and the size of the first image region is relatively low. For example, if the ratio deviation between the first screen and the first image region is relatively small, it indicates that the aspect ratios of the first screen and the first image region are relatively close. The first image region is cut based on the size of the first screen, and a wallpaper image obtained through cutting may include more features in the first image region. If the ratio deviation between the first screen and the first image region is relatively large, it indicates that the aspect ratios of the first screen and the first image region are relatively large. When the first image region is cut based on the size of the first screen, it is difficult to include all features in the first image region in a wallpaper image obtained through cutting.

When the ratio deviation between the size of the first screen and the size of the first image region is relatively large, the foldable screen device may cut the first image region, and retain only a subject part of the first subject. In this way, the first wallpaper image used as the first screen of a relatively small size may include a main feature of the first subject.

In a possible implementation of the first aspect, there may be a plurality of first subjects, and the determining, based on the location of the first subject in the image, the first image region including the first subject includes: determining a first target subject from the plurality of first subjects based on a folding manner of the foldable screen device; and determining, based on a location of the first target subject in the image, a region that is in the image and that includes a target feature of the first target subject as the first image region.

The first subject is a subject with a highest priority in the image. When the image includes a plurality of subjects with a highest priority, the foldable screen device may determine a first target subject from the plurality of first subjects, so that when a wallpaper is cut for an outer screen of a relatively small size, the image may be cut to retain a region that is in the image and that includes the first target subject, to ensure that features of the first target subject are included in the first wallpaper image as much as possible.

In a possible implementation of the first aspect, the separately setting each of the wallpaper images as the wallpaper of the adapted screen includes: separately previewing each of the wallpaper images on the adapted screen; when an interaction instruction for any previewed wallpaper image is received, adjusting the previewed wallpaper image according to the interaction instruction; and setting each adjusted wallpaper image as the wallpaper of the adapted screen. By previewing each wallpaper image obtained through cutting, the user can conveniently view an effect after the wallpaper is set, and the user can adjust the wallpaper based on an actual display effect, so that a finally set wallpaper meets a user expectation and meets a user requirement.

According to a second aspect, a wallpaper setting apparatus for a foldable screen device is provided, including:
a recognition module, configured to recognize a subject in an image;
a cutting module, configured to cut the image based on a location of the subject in the image and size information of various screens of the foldable screen device, to obtain a plurality of wallpaper images that adapt to the various screens, where sizes of the various screens are different, and any one of the wallpaper images includes the subject; and
a setting module, configured to separately set each of the wallpaper images as a wallpaper of an adapted screen.

In a possible implementation of the second aspect, the cutting module may be specifically configured to: determine, based on the location of the subject in the image, an image region that is in the image and that includes the subject; and cut the image based on the size information of the various screens of the foldable screen device to obtain the plurality of wallpaper images that adapt to the various screens, where any one of the wallpaper images includes at least the subject in the image region.

In a possible implementation of the second aspect, the cutting module may be further configured to: determine a folding manner of the foldable screen device, where the folding manner includes horizontal folding or vertical folding, and any folding manner is corresponding to one cutting direction; and cut the image based on a cutting direction corresponding to the folding manner to obtain a plurality of wallpaper images, where each wallpaper image obtained through cutting has a same aspect ratio as an adapted screen.

In a possible implementation of the second aspect, the cutting module may be further configured to: if the folding manner of the foldable screen device is horizontal folding, cut the image in a vertical cutting manner to obtain a wallpaper image that has a same aspect ratio as an adapted screen; or if the folding manner of the foldable screen device is vertical folding, cut the image in a horizontal cutting manner to obtain a wallpaper image that has a same aspect ratio as the adapted screen.

In a possible implementation of the second aspect, the various screens of the foldable screen device include a first screen whose size information is less than a preset value, and the cutting module may be further configured to: determine a location of a subject part of the subject in the image; and cut the image based on the size information of the first screen to obtain a first wallpaper image that includes the subject part of the subject and adapts to the first screen. The subject includes a plurality of parts, different parts have different priorities, and the subject part has a highest priority.

In a possible implementation of the second aspect, the cutting module may be further configured to: determine a central point of the subject; and determine, based on the central point, a region that is in the image and that includes a target feature of the subject as an image region that needs to be retained.

In another possible implementation of the second aspect, the subject includes a first subject and a second subject, the foldable screen device includes a first screen and a second screen, a size of the first screen is less than a size of the second screen, and the cutting module may be further configured to: separately determine priorities of the first subject and the second subject; and when the priority of the first subject is higher than the priority of the second subject, cut the image based on a location of the first subject in the image and the size information of the various screens of the foldable screen device, to obtain a first wallpaper image that adapts to the first screen, and cut the image to obtain a second wallpaper image that adapts to the second screen, where the first wallpaper image includes the first subject.

In a possible implementation of the second aspect, the cutting module may be further configured to: determine, based on the location of the first subject in the image, a first image region including the first subject; and cut the image based on size information of the first screen to obtain the first wallpaper image including the first image region, where the first wallpaper image and the first screen have a same aspect ratio.

In a possible implementation of the second aspect, the cutting module may be further configured to: determine a ratio deviation between the size of the first screen and a size of the first image region; and if the ratio deviation is greater than a preset deviation value, determine a location of a subject part of the first subject in the first image region; and cut the first image region based on the size information of the first screen to obtain the first wallpaper image including the subject part of the first subject.

In another possible implementation of the second aspect, there are a plurality of first subjects, and the cutting module may be further configured to: determine a first target subject from the plurality of first subjects based on a folding manner of the foldable screen device; and determine, based on a location of the first target subject in the image, a region that is in the image and that includes a target feature of the first target subject as the first image region.

In a possible implementation of the second aspect, the cutting module may be further configured to: determine a second image region based on locations of the first subject and the second subject in the image, where the second image region includes the first subject and the second subject; and cut the image based on size information of the second screen to obtain the second wallpaper image including the second image region, where the second wallpaper image and the second screen have a same aspect ratio.

In a possible implementation of the second aspect, the setting module may be specifically configured to: separately preview each of the wallpaper images on the adapted screen; when an interaction instruction for any previewed wallpaper image is received, adjust the previewed wallpaper image according to the interaction instruction; and set each adjusted wallpaper image as the wallpaper of the adapted screen.

According to a third aspect, a foldable screen device is provided, including a memory, a processor, and a computer program stored in the memory and capable of running on the processor. When executing the computer program, the processor may implement the wallpaper setting method for a foldable screen device according to any implementation of the first aspect.

According to a fourth aspect, a computer-readable storage medium is provided, where the computer-readable storage medium stores computer instructions, and when the computer instructions are run on a foldable screen device, the foldable screen device is enabled to perform the foregoing related method steps to implement the method for setting a wallpaper of a foldable screen device according to any implementation of the first aspect.

According to a fifth aspect, a computer program product is provided. When the computer program product runs on a computer, the computer performs the foregoing related steps, so as to implement the wallpaper setting method for a foldable screen device according to any implementation of the first aspect.

According to a sixth aspect, a chip is provided. The chip includes a memory and a processor. The processor executes a computer program stored in the memory, to implement the wallpaper setting method for a foldable screen device according to any implementation of the first aspect.

It may be understood that, for beneficial effects of the second aspect to the sixth aspect, refer to related descriptions in the first aspect. Details are not described herein again.

### BRIEF DESCRIPTION OF DRAWINGS

FIG. 1 is a diagram of a structure of an electronic device according to an embodiment of this application;
FIG. 2 is a diagram of a wallpaper setting effect according to an embodiment of this application;
FIG. 3 is a diagram of another wallpaper setting effect according to an embodiment of this application;
FIG. 4 is a diagram of an overall framework of a wallpaper setting method for a foldable screen device according to an embodiment of this application;
FIG. 5 is a diagram of an image cutting process according to an embodiment of this application;
FIG. 6 is a diagram of another image cutting process according to an embodiment of this application;
FIG. 7 is a diagram of still another image cutting process according to an embodiment of this application;
FIG. 8 is a diagram of yet another image cutting process according to an embodiment of this application;
FIG. 9 is a diagram of interface interaction in a wallpaper setting method according to an embodiment of this application;
FIG. 10 is a schematic flowchart of a wallpaper setting method for a foldable screen device according to an embodiment of this application;
FIG. 11 is a comparison diagram of a wallpaper setting effect according to an embodiment of this application;
FIG. 12 is a comparison diagram of another wallpaper setting effect according to an embodiment of this application;
FIG. 13 is a diagram of a wallpaper setting method for a foldable screen device according to an embodiment of this application; and
FIG. 14 is a diagram of a wallpaper setting apparatus for a foldable screen device according to an embodiment of this application.

### DESCRIPTION OF EMBODIMENTS

To clearly describe technical solutions in embodiments of this application, terms such as "first" and "second" are used in embodiments of this application to distinguish between same items or similar items that provide basically same functions or purposes. For example, a first image region, a second image region, and the like are merely used to distinguish between different image regions in an image, and do not impose any other limitation thereto.

It should be noted that, in embodiments of this application, the word "example" or "for example" or the like represents giving an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner.

A service scenario described in embodiments of this application is intended to describe the technical solutions in embodiments of this application more clearly, but does not constitute a limitation on the technical solutions provided in embodiments of this application. A person of ordinary skill in the art may learn that as a new service scenario emerges, the technical solutions provided in embodiments of this application are also applicable to a similar technical problem.

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

Steps in a wallpaper setting method for a foldable screen device provided in embodiments of this application are merely used as examples. Not all steps are mandatory steps, or not all content in each step is mandatory. In a use process, addition or deletion may be performed as required. A same step or steps or content having a same function in embodiments of this application may be mutually referenced in different embodiments.

The wallpaper setting method for a foldable screen device provided in embodiments of this application may be applied to a foldable screen device. Generally, the foldable screen device includes an outer screen and an inner screen. Size information of the outer screen and size information of the inner screen are different, and the size information of the outer screen and the size information of the inner screen may refer to a size of the screen, an aspect ratio, or a resolution of the screen.

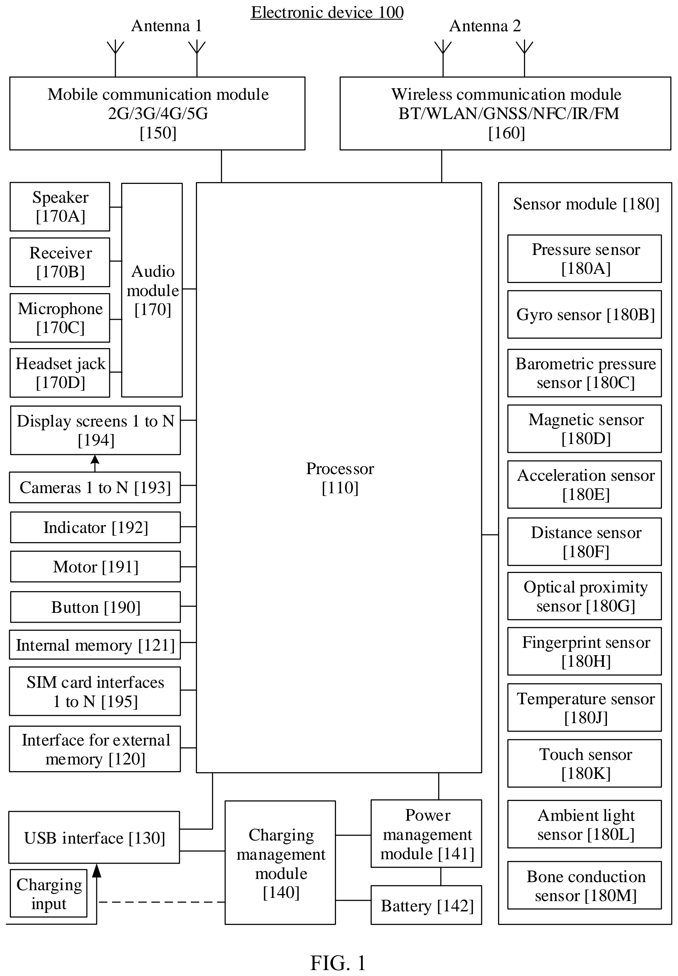

For example, FIG. 1 is a diagram of a structure of an electronic device 100. For a structure of the foldable screen device, refer to a structure of the electronic device 100.

The electronic device 100 may include a processor 110, an interface 120 for external memory, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments of this application, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments of this application, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (serial clock line, SCL). In some embodiments of this application, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the 12C interface, so that the processor 110 communicates with the touch sensor 180K through the 12C bus interface, to implement a touch function of the electronic device 100.

The I2S interface may be configured to perform audio communication. In some embodiments of this application, the processor 110 may include a plurality of groups of I2S buses. The processor 110 may be coupled to the audio module 170 through the I2S bus, to implement communication between the processor 110 and the audio module 170. In some embodiments of this application, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments of this application, the audio module 170 may be coupled to the wireless communication module 160 through the PCM bus interface. In some embodiments of this application, the audio module 170 may alternatively transmit an audio signal to the wireless communication module 160 through the PCM interface, to implement a function of answering a call through a Bluetooth headset.

The UART interface is a universal serial data bus, and is configured to perform asynchronous communication. The bus may be a two-way communication bus. The bus converts to-be-transmitted data between serial communication and parallel communication. In some embodiments of this application, the UART interface is usually configured to connect the processor 110 and the wireless communication module 160. For example, the processor 110 communicates with a Bluetooth module in the wireless communication module 160 through the UART interface, to implement a Bluetooth function. In some embodiments of this application, the audio module 170 may transmit an audio signal to the wireless communication module 160 through the UART interface, to implement a function of playing music through a Bluetooth headset.

The MIPI interface may be configured to be connected to the processor 110 and a peripheral device such as the display screen 194 or the camera 193. The MIPI interface includes a camera serial interface (camera serial interface, CSI), a display serial interface (display serial interface, DSI), and the like.

In some embodiments of this application, the processor 110 communicates with the camera 193 through the CSI interface, to implement a photographing function of the electronic device 100. The processor 110 communicates with the display screen 194 through the DSI interface, to implement a display function of the electronic device 100.

The GPIO interface may be configured by software. The GPIO interface may be configured as a control signal or a data signal. In some embodiments of this application, the GPIO interface may be configured to connect the processor 110 and the camera 193, the display screen 194, the wireless communication module 160, the audio module 170, the sensor module 180, or the like. The GPIO interface may be further configured as the I2C interface, the I2S interface, the UART interface, the MIPI interface, or the like.

The USB interface 130 is an interface conforming to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device. The USB interface 130 may alternatively be configured to connect to a headset, and play audio through the headset. The interface may be further configured to connect to another electronic device such as an AR device.

It may be understood that an interface connection relationship between modules illustrated in this embodiment of this application is merely an illustrative description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect the battery 142, the charging management module 140, and the processor 110. The power management module 141 receives an input from the battery 142 and/or the charging management module 140, and supplies power to the processor 110, the internal memory 121, the display screen 194, the camera 193, the wireless communication module 160, and the like. The power management module 141 may be further configured to monitor parameters such as a battery capacity, a battery cycle count, and a battery health status (electric leakage or impedance).

In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transfer the electromagnetic wave to the modem processor for demodulation. The mobile communication module 150 may further amplify a signal modulated by the modem processor, and convert the signal into an electromagnetic wave for radiation through the antenna 1.

In some embodiments of this application, at least some functional modules of the mobile communication module 150 may be disposed in the processor 110. In some embodiments of this application, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display screen 194.

In some embodiments of this application, the modem processor may be an independent device. In some other embodiments, the modem processor may be independent of the processor 110, and is disposed in a same device as the mobile communication module 150 or another functional module.

The wireless communication module 160 may provide a solution for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology applied to the electronic device 100. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments of this application, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 may implement a display function through the GPU, the display screen 194, the application processor, and the like. The GPU is a microprocessor for image processing, and is connected to the display screen 194 and the application processor. The GPU is configured to: perform mathematical and geometric computation, and render an image. The processor 110 may include one or more GPUs, which execute program instructions to generate or change display information.

The display screen 194 is also referred to as a screen of the electronic device 100. The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In this embodiment of this application, the electronic device 100 may include two or N display screens 194. N is a positive integer greater than 2. At least one display screen 194 of the electronic device 100 is a foldable screen. For example, the electronic device includes two display screens 194, namely, an outer screen and an inner screen. The inner screen may be a foldable display screen.

The electronic device 100 can implement a photographing function by using the ISP, the camera 193, the video codec, the GPU, the display screen 194, the application processor, and the like.

The ISP is configured to process data fed back by the camera 193. For example, during shooting, a shutter is pressed, and light is transmitted to a photosensitive element of the camera through a lens. The photosensitive element of the camera converts an optical signal into an electrical signal, and transmits the electrical signal to the ISP for processing, to convert the electrical signal into a visible image. The ISP may further perform algorithm optimization on noise, brightness, and a skin color of the image. The ISP may further optimize parameters such as exposure and a color temperature of a photographing scene. In some embodiments of this application, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in a format such as RGB or YUV. In some embodiments of this application, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor that quickly processes input information with reference to a structure of a biological neural network, for example, a mode of transfer between human brain neurons, and may further continuously perform self-learning. Applications such as intelligent cognition of the electronic device 100, such as image recognition, facial recognition, speech recognition, and text understanding, can be implemented by using the NPU.

The interface 120 for external memory may be configured to connect to an external storage card, for example, a micro SD card, to extend a storage capability of the electronic device 100. The external storage card communicates with the processor 110 through the interface 120 for external memory, to implement a data storage function. For example, files such as music and videos are stored in the external storage card.

The internal memory 121 may be configured to store computer-executable program code. The executable program code includes instructions. The internal memory 121 may include a program storage region and a data storage region. The program storage region may store an operating system, an application required by at least one function (for example, a voice playing function or an image playing function), and the like. The data storage region may store data (such as audio data and an address book) created when the electronic device 100 is used, and the like.

In addition, the internal memory 121 may include a high-speed random access memory, and may further include a non-volatile memory, for example, at least one magnetic disk storage device, a flash memory, or a universal flash storage (universal flash storage, UFS).

The processor 110 runs instructions stored in the internal memory 121 and/or instructions stored in the memory disposed in the processor, to perform various function applications and data processing of the electronic device 100.

The electronic device 100 may implement audio functions, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments of this application, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or voice information is received through the electronic device 100, the receiver 170B may be put close to a human ear to listen to a voice.

The microphone 170C, also referred to as a "mike" or a "microphone", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may be alternatively disposed on the electronic device 100, to collect a sound signal, implement noise reduction, recognize a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display screen 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display screen 194, the electronic device 100 detects intensity of the touch operation through the pressure sensor 180A. The electronic device 100 may also calculate a touch location based on a detection signal of the pressure sensor 180A.

In some embodiments of this application, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The gyro sensor 180B may be configured to determine a moving posture of the electronic device 100. In some embodiments of this application, angular velocities of the electronic device 100 around three axes (namely, axes x, y, and z) may be determined by using the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may be further used in a navigation scenario and a motion-sensing game scenario.

The barometric pressure sensor 180C is configured to measure barometric pressure. In some embodiments of this application, the electronic device 100 calculates an altitude based on a barometric pressure value measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments of this application, when the electronic device 100 is a flip device, the electronic device 100 may detect opening and closing of a flip cover by using the magnetic sensor 180D. Further, a feature such as automatic unlocking upon opening the flip cover is set based on a detected opening or closing state of a leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments of this application, for example, in a photographing scene, the electronic device 100 may measure a distance by using the distance sensor 180F, to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display screen 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may implement fingerprint-based unlocking, application lock access, fingerprint-based photographing, fingerprint-based call answering, and the like by using a feature of the collected fingerprint.

The temperature sensor 180J is configured to detect a temperature. In some embodiments of this application, the electronic device 100 executes a temperature processing policy based on the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch device". The touch sensor 180K may be disposed on the display screen 194, and the touch sensor 180K and the display screen 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display screen 194. In some other embodiments, the touch sensor 180K may also be disposed on a surface of the electronic device 100 at a location different from that of the display screen 194.

The bone conduction sensor 180M may obtain a vibration signal. In some embodiments of this application, the bone conduction sensor 180M may obtain a vibration signal of a vibration bone of a human vocal-cord part. The bone conduction sensor 180M may also be in contact with a body pulse to receive a blood pressure beating signal.

In some embodiments of this application, the bone conduction sensor 180M may alternatively be disposed in a headset to be combined into a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different regions of the display screen 194. Different application scenarios (for example, a time reminder, information receiving, an alarm clock, and a game) may also correspond to different vibration feedback effects. A touch vibration feedback effect may be further customized.

The indicator 192 may be an indicator light, and may indicate a charging status or a power change, or may indicate a message, a missed call, a notification, or the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 can support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments of this application, the electronic device 100 uses an eSIM (namely, an embedded SIM card). The eSIM card may be embedded into the electronic device 100, and cannot be separated from the electronic device 100.

The wallpaper setting method provided in embodiments of this application may be implemented on an electronic device having the foregoing hardware structure.

As described above, the screen of the foldable screen device includes an outer screen and an inner screen. When setting a wallpaper for the screen of the foldable screen device, the user needs to separately set a wallpaper for the outer screen and the inner screen. Due to a difference between size information of the outer screen and size information of the inner screen, if a same image is cut in a same manner, effects of an obtained screen wallpaper presented on the outer screen and the inner screen are greatly different.

For the foregoing problem, an embodiment of this application provides a wallpaper setting method for a foldable screen device. By recognizing a subject in an image used as a screen wallpaper, the image may be separately cut in different cutting manners based on a location of the subject in the image and size information of various screens of the foldable screen device, to obtain a plurality of wallpaper images. Each of the plurality of wallpaper images may be used as a wallpaper of one screen of the foldable screen device. For example, for an outer screen and an inner screen of different sizes of the foldable screen device, two different cutting manners may be used to cut an image, for example, a cutting manner 1 and a cutting manner 2. The foldable screen device may cut a wallpaper for the outer screen based on the cutting manner 1 to obtain a wallpaper image (for example, a wallpaper image 1), and cut a wallpaper for the inner screen based on the cutting manner 2 to obtain another wallpaper image (for example, a wallpaper image 2). Then, the foldable screen device may use the wallpaper image 1 as the wallpaper of the outer screen, and use the wallpaper image 2 as the wallpaper of the inner screen, to ensure that each wallpaper image obtained through cutting can adapt to a size of a corresponding screen.

In this embodiment of this application, when cutting the image based on the cutting manner 1 or the cutting manner 2, the foldable screen device may cut the image based on the location of the recognized subject in the image, to ensure that the wallpaper obtained through cutting includes the subject or a subject part of the subject. During cutting, the foldable screen device may determine, based on a size of a screen, to cut the image to retain a complete subject in the image or retain only a subject part of the subject in the image. Generally, for a screen of a relatively large size, the foldable screen device may cut the image to retain a complete subject in the image; and for a screen of a relatively small size, the foldable screen device may retain only a subject part of the subject in the image after cutting the image. The subject part may be a part reflecting a main feature of the subject. For example, if the recognized subject in the image is a person, the subject part of the subject may be a face part.

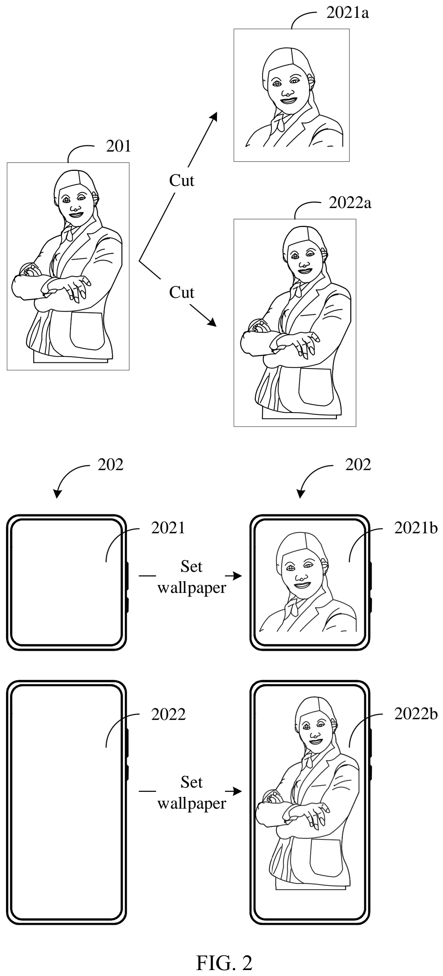

FIG. 2 is a diagram of a wallpaper setting effect according to an embodiment of this application. In FIG. 2, an image 201 is an image that is planned to be used as a screen wallpaper of a foldable screen device. The image 201 includes a person, and the person is a subject in the image 201. FIG. 2 further shows a foldable screen device 202, where the foldable screen device 202 is an electronic device that is vertically foldable. An outer screen of the foldable screen device 202 in a folded state is shown in 2021 of FIG. 2, and an inner screen of the foldable screen device 202 in an unfolded state is shown in 2022 of FIG. 2. It can be seen from FIG. 2 that a size of the outer screen 2021 is less than a size of the inner screen 2022. When setting a wallpaper for the outer screen 2021 and the inner screen 2022, the foldable screen device 202 may use different cutting manners based on a location of the subject in the image 201 and the sizes of the outer screen 2021 and the inner screen 2022. Specifically, because the size of the outer screen 2021 is relatively small, and the outer screen 2021 cannot completely accommodate the subject in the image 201, the foldable screen device 202 may retain a subject part of the subject during cutting, that is, cut the image 201 and retain a face part of the person in the image 201, to obtain a wallpaper image 2021a. After the wallpaper image 2021a is set as the wallpaper of the outer screen 2021, an effect of the wallpaper image 2021a of the foldable screen device 202 in the folded state may be shown in 2021b of FIG. 2. In addition, the size of the inner screen 2022 of the foldable screen device 202 in the unfolded state is relatively large, and the inner screen 2022 can completely accommodate the subject in the image 201. Therefore, the foldable screen device 202 may cut the image 201 and retain a complete subject in the image 201, to obtain a wallpaper image 2022a. After the wallpaper image 2022a is set as the wallpaper of the inner screen 2022, an effect of the wallpaper image 2022a may be shown in 2022b of FIG. 2.

It can be learned by comparing the screen 2021b with the screen 2022b in FIG. 2 that, according to the wallpaper setting method provided in this embodiment of this application, the image may be cut in targeted manners based on different size information of the inner screen and the outer screen of the foldable screen device, to obtain a wallpaper image that matches actual size information of each screen. In this way, it can be ensured that both images used as wallpapers of the outer screen and the inner screen include the subject or the subject part of the subject in the original image, so that the wallpaper images of the inner and outer screens are not violently cut due to a change in a form of the inner screen and the outer screen of the foldable screen device, and styles of the wallpaper images of the inner and outer screens can also be ensured to be uniform.

In a possible implementation of this embodiment of this application, the image used as the wallpaper of each screen of the foldable screen device may include more than one subject. For example, the image includes two or more subjects. For an image including two or more subjects, the image may be cut by using the wallpaper setting method provided in this embodiment of this application, to obtain a plurality of wallpaper images that respectively adapt to various screens.

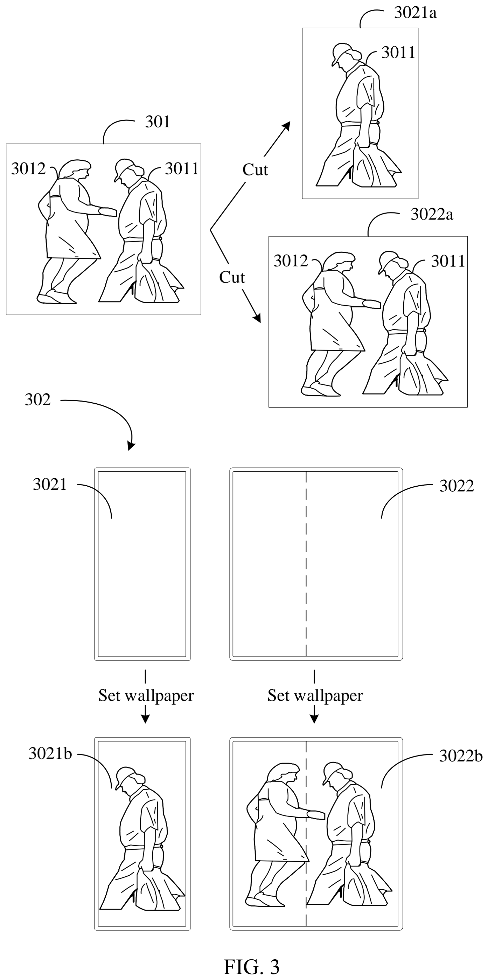

FIG. 3 is a diagram of another wallpaper setting effect according to an embodiment of this application. In FIG. 3, an image 301 is an image that is planned to be used as a screen wallpaper of a foldable screen device, and the image 301 includes two subjects, to be specific, a person 3011 and a person 3012 in the image 301. FIG. 3 further shows a foldable screen device 302, where the foldable screen device 302 is an electronic device that is horizontally foldable. An outer screen of the foldable screen device 302 in a folded state is shown in 3021 of FIG. 3, and an inner screen of the foldable screen device 302 in an unfolded state is shown in 3022 of FIG. 3. It can be seen from FIG. 3 that a size of the outer screen 3021 is less than a size of the inner screen 3022. When setting wallpapers for the outer screen 3021 and the inner screen 3022, the foldable screen device 302 may use different cutting manners based on a location of the subjects in the image 301 and size information of the outer screen 3021 and the inner screen 3022. Specifically, because the size of the outer screen 3021 is relatively small and cannot completely accommodate the plurality of subjects in the image 301, the foldable screen device 302 may cut the image 301 to obtain a wallpaper image 3021a including only one subject in the image 301. The wallpaper image 3021a is also a wallpaper image obtained by cutting the image 301 to retain the person 3011 in the image 301. After the wallpaper image 3021a is set as the wallpaper of the outer screen 3021, an effect of the wallpaper image 3021a of the foldable screen device 302 in the folded state may be shown in 3021b of FIG. 3. In addition, the size of the inner screen 3022 of the foldable screen device 302 in the unfolded state is relatively large, and the inner screen 3022 can completely accommodate the plurality of subjects in the image 301. Therefore, when cutting the image 301, the foldable screen device 302 may retain the plurality of subjects in the image 301, so that a wallpaper image 3022a obtained through cutting includes the plurality of subjects in the image 301. For example, the wallpaper image 3022a in FIG. 3 includes the person 3011 and the person 3012 in the original image 301. After the wallpaper image 3022a is set as the wallpaper of the inner screen 3022, an effect of the wallpaper image 3022a may be shown in 3022b of FIG. 3.

It can be learned by comparing the screen 3021b with the screen 3022b in FIG. 3 that, when the image used as the screen wallpaper includes a plurality of subjects, according to the wallpaper setting method provided in this embodiment of this application, the image may be cut in targeted manners based on different sizes of the inner screen and the outer screen of the foldable screen device, so that an image used as a wallpaper of a screen of a smaller size includes only a part of subjects in the original image; and for a screen of a larger size, a wallpaper image that is obtained through cutting and that adapts to the screen may include all subjects in the original image. In this way, the wallpaper images set as the inner screen and the outer screen of the foldable screen device may include different subjects, and in a process of unfolding or folding the foldable screen device, use fun of a user is increased. For example, when the image planned to be used as the wallpaper of the screen is a couple photo, the image set as the wallpaper of the outer screen of a smaller size may be a single-person image of a person in the couple, and the image set as the wallpaper of the inner screen of a larger size may be a group image of the two persons, thereby increasing fun of the user in a process of folding or unfolding the foldable screen device.

With reference to the examples of the wallpaper setting effects shown in FIG. 2 and FIG. 3, FIG. 4 is a diagram of an overall framework of a wallpaper setting method for a foldable screen device according to an embodiment of this application. Implementation of the method may include the following parts S401 to S405.

S401: Information input.

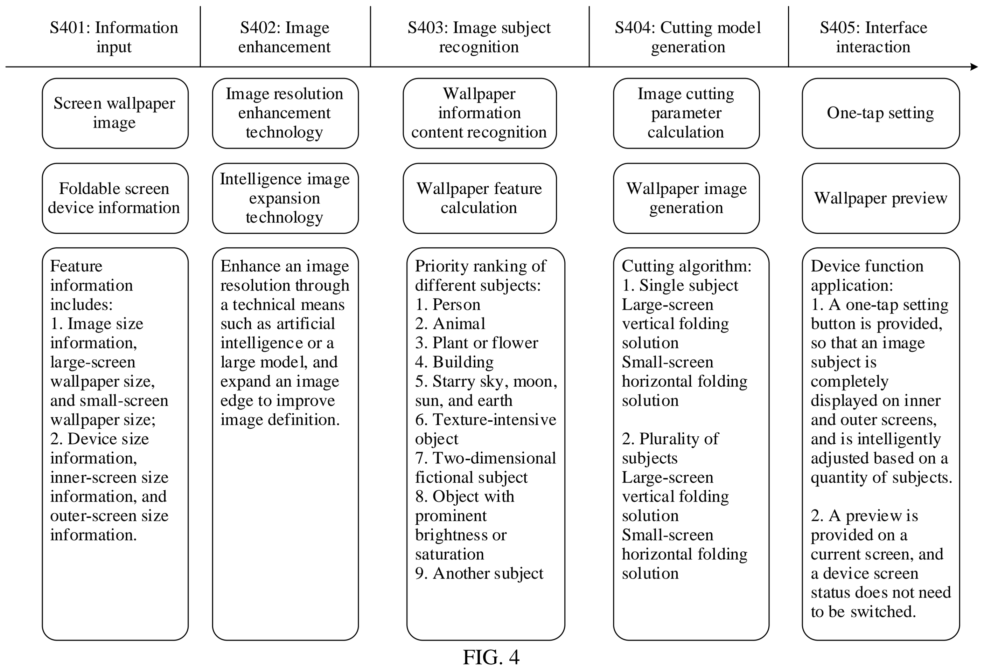

In this embodiment of this application, the input information may be related information that needs to be determined before the foldable screen device sets a wallpaper of each screen. The input information may include an image used as a screen wallpaper of the foldable screen device and related information of the image. The image may be any image selected by a user from a plurality of images stored in the foldable screen device, or may be an image captured by the user in real time by using a camera of the foldable screen device, or may be an image received by the foldable screen device from another device. For example, the foldable screen device may receive an image from another device by using a short-distance communication technology such as Bluetooth, or by using a wireless communication technology such as 4G/5G, and use the received image as a wallpaper image of each screen of the device. As shown in FIG. 4, the related information of the image used as the screen wallpaper may include size information of the image, for example, a maximum size of the image, that is, length and width information of the image.

In addition to the image used as the screen wallpaper, the input information may further include device information of the foldable screen device. As shown in FIG. 4, the device information may include size information of each screen of the foldable screen device, for example, a size of an inner screen and a size of an outer screen of the foldable screen device.

In an example, in an unfolded state, the size of the outer screen of the foldable screen device is less than the size of the inner screen. Therefore, the outer screen of the foldable screen device may also be referred to as a small screen, and the inner screen of the foldable screen device may also be referred to as a large screen. Based on the image and the device information of the foldable screen device, size information of wallpapers used as the inner screen and the outer screen of the foldable screen device, that is, a large-screen wallpaper size and a small-screen wallpaper size, may be further determined. The large-screen wallpaper size and the small-screen wallpaper size may also be used as input information, and play a role in a subsequent wallpaper setting process.

S402: Image enhancement.

In this embodiment of this application, for the image determined to be used as the screen wallpaper, the foldable screen device may process the image by using an image enhancement technology. As shown in FIG. 4, an image enhancement technology that may be used by the foldable screen device may include an image resolution enhancement technology and an intelligent image expansion technology. Based on the image enhancement technology, the foldable screen device may enhance an image resolution by using a technical means such as artificial intelligence or a large model, and expand an image edge to improve image definition.

S403: Image subject recognition.

In this embodiment of this application, image subject recognition may be recognition of information or content included in the image used as the screen wallpaper, and calculation of an image feature. For example, a subject such as a person, an animal, or a plant included in the image may be recognized through image subject recognition.

In a possible implementation of this embodiment of this application, the image may include only a single subject. For example, the image includes only one person, one animal, or one plant. In another possible implementation of this embodiment of this application, the image may alternatively include a plurality of subjects. The plurality of subjects may be a same type of subjects. For example, the image may include a plurality of persons, a plurality of animals, or a plurality of plants. In still another possible implementation of this embodiment of this application, the plurality of subjects may be different types of subjects, and there may be more than one subject of each type. For example, the image may include both a person and an animal. There may be one or more persons, and there may also be one or more animals.

In a possible implementation of this embodiment of this application, when the image includes a plurality of different types of subjects, in a process of performing image subject recognition, the foldable screen device may further determine a priority of each recognized subject. Compared with a subject with a low priority, when a subject with a high priority is cut as a wallpaper image of each screen, it may be preferentially ensured that the subject with a high priority exists in a wallpaper image obtained through cutting. For example, when the foldable screen device cuts an image including both a person and an animal, if a priority of the person is higher than a priority of the animal, the foldable screen device may preferentially cut the person in the image, and preferentially ensure that a wallpaper image obtained through cutting includes an image of the person.

In an example of this embodiment of this application, as shown in FIG. 4, a priority relationship between different types of subjects may be shown as follows:
people > animal > plant or flower > building > starry sky, moon, sun, earth, and the like > texture-intensive object > two-dimensional fictional subject > object with prominent brightness or saturation > another subject.

The symbol ">" in the foregoing example indicates that a priority of a subject on the left side of the symbol is "higher than" a priority of a subject on the right side of the symbol. For example, in the foregoing example, a priority of the person is higher than a priority of the animal, and the priority of the animal is higher than a priority of a subject such as the plant or the flower, the building, the starry sky, the moon, the sun, or the earth.

S404: Cutting model generation.

In this embodiment of this application, generation of a cutting model may be a process of generating different solutions of cutting an image by the foldable screen device, including image cutting parameter calculation and wallpaper image generation. The image cutting parameter calculation may refer to a process of calculating, based on information such as a location of the recognized subject in the image and size information of each screen of the foldable screen device, a parameter required for cutting a wallpaper image for each screen. On this basis, the foldable screen device may cut the image based on the calculated parameter by performing a wallpaper image generation step, to obtain a screen wallpaper that adapts to each screen.

In a process of generating a wallpaper image, for different folding manners of the foldable screen device and different quantities of subjects in the image, a computer device may generate different cutting solutions. As shown in FIG. 4, in a case in which the image includes only a single subject, the foldable screen device may generate a vertical folding and cutting solution for the large screen, a horizontal folding and cutting solution for the small screen, and the like. Correspondingly, in a case in which the image includes a plurality of subjects, the foldable screen device may also generate a vertical folding and cutting solution for the large screen, a horizontal folding and cutting solution for the small screen, and the like. In a case in which quantities of subjects are different, actual cutting manners of cutting solutions of a same type are different. For example, a vertical folding and cutting solution for the large screen in a case of a single subject and a vertical folding and cutting solution for the large screen in a case of a plurality of subjects belong to different cutting solutions. When the image is cut by using different cutting solutions, image information included in images obtained through cutting is different. That is, the image is cut by using different cutting solutions, and content or image regions of the original image that is or are retained in images obtained after cutting and used as wallpapers are different.

With reference to a specific example, the following describes a process of generating cutting models on foldable screen devices in different folding manners for different quantities of subjects in an image.

### a. Vertically foldable device + Single subject

The vertically foldable device may be a foldable screen device whose folding manner is vertical folding.

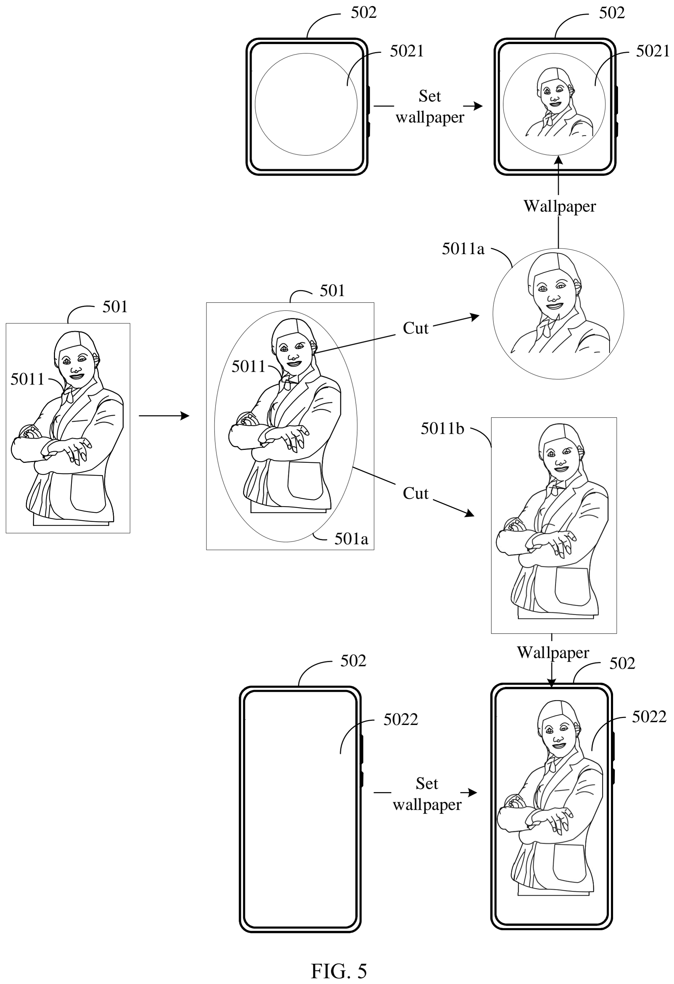

FIG. 5 is a diagram of an image cutting process according to an embodiment of this application. FIG. 5 shows an example of cutting a wallpaper image for a vertically foldable screen device when an image includes only a single subject.

In FIG. 5, an image 501 includes only a single subject, that is, a subject 5011, and a foldable screen device 502 may recognize the subject 5011 by performing the image subject recognition step S403. The foldable screen device 502 in FIG. 5 is a vertically foldable device, and an outer screen and an inner screen of the foldable screen device 502 in a folded state and an unfolded state may be respectively shown as a screen 5021 and a screen 5022 in FIG. 5. The screen 5021 is the outer screen of the foldable screen device 502 in the folded state, and the screen 5022 is the inner screen of the foldable screen device 502 in the unfolded state. It can be seen from FIG. 5 that a size of the outer screen in the folded state is less than that of the inner screen in the unfolded state. The foldable screen device 502 needs to cut the image 501 to obtain wallpaper images respectively for the screens 5021 and 5022.

In this embodiment of this application, the foldable screen device 502 may determine, based on a location of the subject 5011 in the image 501, an image region that is in the image 501 and that includes the subject 5011. In a possible implementation, the foldable screen device may determine a central point of the subject 5011 based on the location of the subject 5011 in the image 501, and then determine, based on the central point, a region that is in the image 501 and that includes a target feature of the subject 5011 as an image region that needs to be retained. As shown in FIG. 5, the image region that needs to be retained may be a region 501a in the image 501. The region 501a includes a relatively complete feature of the subject 5011, which is referred to as a complete feature for short.

After determining the image region that needs to be retained, the foldable screen device 502 may separately cut the image 501 based on size information of the screens, to obtain a plurality of wallpaper images that adapt to the screens. That is, the foldable screen device 502 may cut the image 501 to obtain images that can be used as wallpapers of the screens 5021 and 5022. In an example, when cutting the image, the foldable screen device 502 may cut the image in different directions based on different folding manners. For example, a folding manner of the foldable screen device 502 is vertical folding. Therefore, when cutting the image, the foldable screen device 502 may cut the image 501 in a horizontal cutting manner to obtain a wallpaper image that has a same aspect ratio as a screen that adapts to the image. A cutting solution used by the foldable screen device 502 to cut the image 501 to obtain the wallpaper of the screen 5021 may be different from a cutting solution used by the foldable screen device 502 to cut the image 501 to obtain the wallpaper of the screen 5022.

As shown in FIG. 5, because the size of the screen 5021 is relatively small and the screen 5021 cannot completely accommodate a complete feature of the subject 5011, after determining the image region that needs to be retained in the image 501, the foldable screen device 502 may cut the image 501 based on size information of the screen 5021, to retain a region in which a subject part of the subject 5011 in the image 501 is located. For example, in FIG. 5, the subject 5011 is a person, and a corresponding subject part may be a face part in FIG. 5. A wallpaper image 5011a may be obtained by cutting the face part in the image 501. The size of the screen 5022 is relatively large and the screen 5022 can accommodate the complete feature of the subject 5011. Therefore, the foldable screen device 502 may cut the image 501 in a horizontal cutting manner based on size information of the screen 5022, to obtain a wallpaper image 5011b including the subject 5011. The wallpaper images 5011a and 5011b may be respectively used as wallpapers of the screens 5021 and 5022 of the foldable screen device 502.

### b. Vertically foldable device + Plurality of subjects

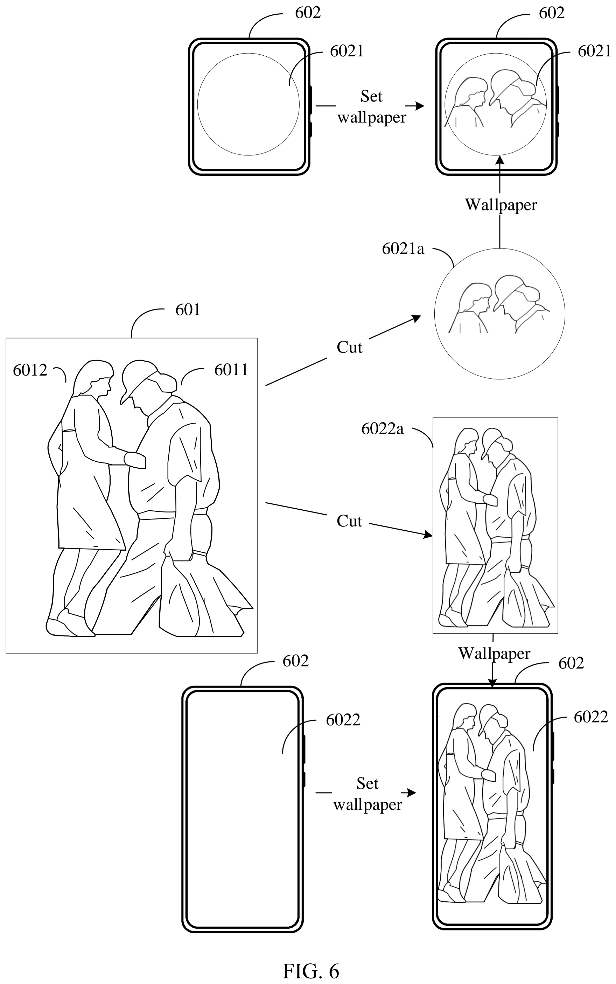

FIG. 6 is a diagram of another image cutting process according to an embodiment of this application. FIG. 6 shows an example of cutting a wallpaper image for a vertically foldable screen device when an image includes a plurality of subjects.

In FIG. 6, an image 601 includes a plurality of subjects, that is, subjects 6011 and 6012. A foldable screen device 602 in FIG. 6 may be a vertically foldable device of a same type as the foldable screen device 502 in FIG. 5. Correspondingly, an outer screen and an inner screen of the foldable screen device 602 in a folded state and an unfolded state may be respectively shown as a screen 6021 and a screen 6022 in FIG. 6. The screen 6021 is the outer screen of the foldable screen device 602 in the folded state, and the screen 6022 is the inner screen of the foldable screen device 602 in the unfolded state. A size of the outer screen in the folded state is less than that of the inner screen in the unfolded state.

Because the size of the screen 6021 is relatively small, and the screen 6021 cannot completely accommodate target features (for example, complete features) of the plurality of subjects 6011 and 6012, when cutting a wallpaper image for the screen 6021, the foldable screen device may cut a subject part of one or more of the subjects to obtain a wallpaper image of the screen 6021.

In a possible implementation of this embodiment of this application, the foldable screen device 602 may cut a subject part of one of the subjects as a wallpaper image of the screen 6021. For example, the foldable screen device 602 may determine, based on priorities of the plurality of subjects in the image 601, to cut the image to retain a subject part of which subject. In an example, if the priorities of the plurality of subjects in the image 601 are not completely the same, the foldable screen device 602 may cut the image to retain a subject part image including a subject with a highest priority as a wallpaper image of the screen 6021.

In another possible implementation of this embodiment of this application, the foldable screen device 602 may cut subject parts of a plurality of subjects as a wallpaper image of the screen 6021. For example, the foldable screen device 602 may cut the image 601 based on the size of the screen 6021, to retain subject parts of the subjects 6011 and 6012. In an example, both the subjects 6011 and 6012 in the image 601 are peoples, and a subject part of the people may be a face part. The foldable screen device 602 may cut the image, to retain face parts of the subjects 6011 and 6012, and obtain the image 6021a as the wallpaper image of the screen 6021. In this way, the image that is to be set as the wallpaper of the screen 6021 may include both the face part of the subject 6011 and the face part of the subject 6012.

In a possible implementation of this embodiment of this application, when cutting the image of the subject with the highest priority as the wallpaper image of the screen 6021, the foldable screen device 602 may further perform cutting in two cases based on the size of the screen 6021.

Case 1: It is assumed that a subject with a highest priority in the image 601 is the subject 6011. If a deviation between an aspect ratio of the screen 6021 and an aspect ratio of an image region in which the subject 6011 is located is relatively small, the screen 6021 may accommodate a complete feature of the subject 6011, or the image region in which the subject 6011 is located is zoomed, so that the screen 6021 can accommodate a complete feature of the subject 6011. In this case, the foldable screen device 602 may cut the image 601 to obtain a wallpaper image including the complete feature of the subject 6011, and use the wallpaper image as an image to be set as a wallpaper of the screen 6021.

Case 2: It is assumed that a subject with a highest priority in the image 601 is the subject 6011. If a deviation between an aspect ratio of the screen 6021 and an aspect ratio of an image region in which the subject 6011 is located is relatively large, the screen 6021 cannot accommodate a complete feature of the subject 6011, or even if the image region in which the subject 6011 is located is zoomed, the screen 6021 cannot accommodate the complete feature of the subject 6011. In this case, the foldable screen device 602 may cut the image 601 to obtain a wallpaper image including only a subject part of the subject 6011. For example, the subject 6011 is a person, and the foldable screen device 602 may cut the image to obtain an image including a face part of the person, and use the image as an image to be set as a wallpaper of the screen 6021.

Because the size of the screen 6022 is relatively large, the foldable screen device 602 may cut the image 601 to obtain an image 6022a including complete features of a plurality of subjects, and use the image 6022a as a wallpaper image of the screen 6022.

### c. Horizontally foldable device + Single subject

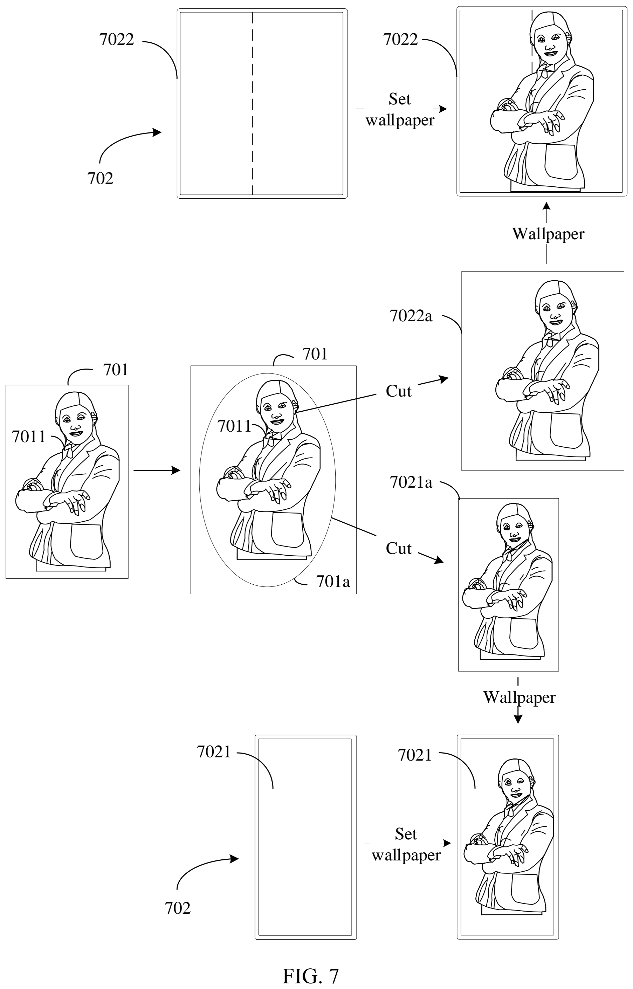

The horizontally foldable device may be a foldable screen device whose folding manner is vertical folding. FIG. 7 is a diagram of still another image cutting process according to an embodiment of this application. FIG. 7 shows an example of cutting a wallpaper image for a horizontally foldable screen device when an image includes only a single subject.

An image 701 in FIG. 7 includes only a single subject, that is, a subject 7011. The foldable screen device 702 is a horizontally foldable device, and an outer screen and an inner screen of the foldable screen device 702 in a folded state and an unfolded state may be respectively shown as a screen 7021 and a screen 7022 in FIG. 7. The screen 7021 is the outer screen of the foldable screen device 702 in the folded state, and the screen 7022 is the inner screen of the foldable screen device 702 in the unfolded state. It can be seen from FIG. 7 that a size of the outer screen in the folded state is less than that of the inner screen in the unfolded state. The foldable screen device 702 needs to cut the image 701 to obtain wallpaper images respectively for the screens 7021 and 7022.

In this embodiment of this application, the foldable screen device 702 may determine, based on a location of the subject 7011 in the image 701, an image region including the subject 7011 in the image 701. As shown in FIG. 7, the image region including the subject 7011 may be a region 701a in the image 701, and the region 701a includes a complete feature of the subject 7011.

For the horizontally foldable device, when a wallpaper image is cut for each screen, the image 701 may be cut in a vertical cutting manner to obtain a wallpaper image that has a same aspect ratio as an adapted screen.

In a possible implementation of this embodiment of this application, the foldable screen device 702 may cut the image 701 in a vertical cutting manner based on size information of the screen 7021, to obtain an image 7021a to be set as a wallpaper of the screen 7021. In addition, the foldable screen device may cut the image 701 based on size information of the screen 7022, to obtain an image 7022a to be set as a wallpaper of the screen 7022. The image 7021a and the image 7022a may be respectively set as the wallpapers of the screen 7021 and the screen 7022.

### d. Horizontally foldable device + Plurality of subjects

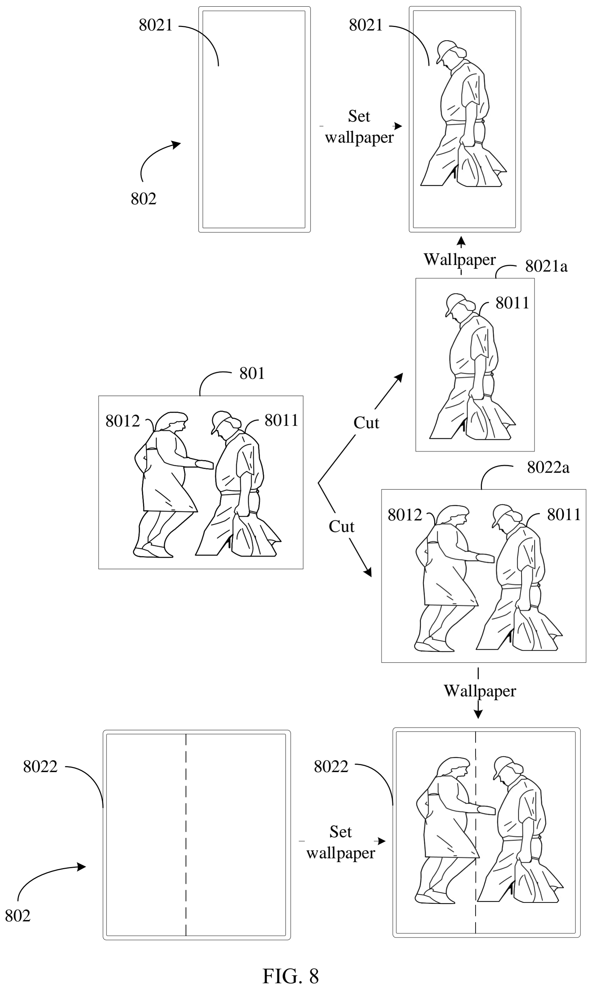

FIG. 8 is a diagram of yet another image cutting process according to an embodiment of this application. FIG. 8 shows an example of cutting a wallpaper image for a horizontally foldable screen device when an image includes a plurality of subjects.

In FIG. 8, an image 801 includes a plurality of subjects, that is, subjects 8011 and 8012. A foldable screen device 802 in FIG. 8 may be a horizontally foldable device of a same type as the foldable screen device 702 in FIG. 7. Correspondingly, an outer screen and an inner screen of the foldable screen device 802 in a folded state and an unfolded state may be respectively shown as a screen 8021 and a screen 8022 in FIG. 8. The screen 8021 is the outer screen of the foldable screen device 802 in the folded state, and the screen 8022 is the inner screen of the foldable screen device 802 in the unfolded state. A size of the outer screen in the folded state is less than that of the inner screen in the unfolded state.

In a possible implementation of this embodiment of this application, when cutting wallpaper images for various screens, the foldable screen device 802 may cut the image 801 to obtain a plurality of wallpaper images, and quantities of subjects included in the wallpaper images may be different.

For example, when cutting a wallpaper image for the screen 8021, the foldable screen device 802 may cut the image 801 to obtain an image including only a single subject.

In this embodiment of this application, when cutting a single subject, the foldable screen device 802 may determine, based on priorities of the plurality of subjects in the image 801, which subject is to be retained through cutting. In an example, if the priorities of the plurality of subjects in the image 801 are not completely the same, the foldable screen device 802 may cut the image to retain an image including a subject with a highest priority as a wallpaper image of the screen 8021. In another example, if the priorities of the plurality of subjects in the image 801 are the same, for example, both the subjects 8011 and 8012 in the image 801 are person images, and priorities of the two are the same, the foldable screen device 802 may randomly cut the image in a vertical cutting manner, to retain an image including any one of the subjects as the wallpaper image of the screen 8021. For example, as shown in FIG. 8, the foldable screen device may cut the image 801 to obtain an image 8021a including the subject 8011 as the wallpaper image of the screen 8021.

In addition, when cutting the wallpaper image for the screen 8022, the foldable screen device 802 may cut the image 801 to obtain an image including the plurality of subjects. For example, as shown in FIG. 8, the foldable screen device may cut the image 801 in a vertical cutting manner, to obtain an image 8022a including the subjects 8011 and 8012 as the wallpaper image of the screen 8022.

S405: Interface interaction.

In this embodiment of this application, an interface interaction function may be a function that the foldable screen device allows a user to adjust each wallpaper image after the wallpaper image of each screen is obtained through cutting and the wallpaper image is previewed on an adapted screen. The interface interaction function provided by the foldable screen device may include functions such as one-tap setting of wallpapers in the folded state and the unfolded state, and preview of the wallpapers in the folded state and the unfolded state. The folded state is a device state presented after at least one foldable screen of the foldable screen device, for example, the inner screen of the foldable screen device, is folded. The unfolded state is a device state presented when the inner screen of the foldable screen device is not folded, that is, when the inner screen is unfolded.

In a possible implementation of this embodiment of this application, the foldable screen device may provide a one-tap setting button. After the user taps the button, the foldable screen device may automatically present each wallpaper image obtained through cutting on a screen that adapts to the wallpaper image, and intelligently adjust the wallpaper image, to ensure that the subject or the subject part of the subject in the image can be completely presented on the screen. On this basis, the user may continue to adjust the wallpaper image presented on the screen. For example, the user may adjust the wallpaper image by performing operations such as dragging and zooming. After the user completes adjustment of the wallpaper image, the foldable screen device may set an image obtained after the adjustment as the wallpaper of the adapted screen.

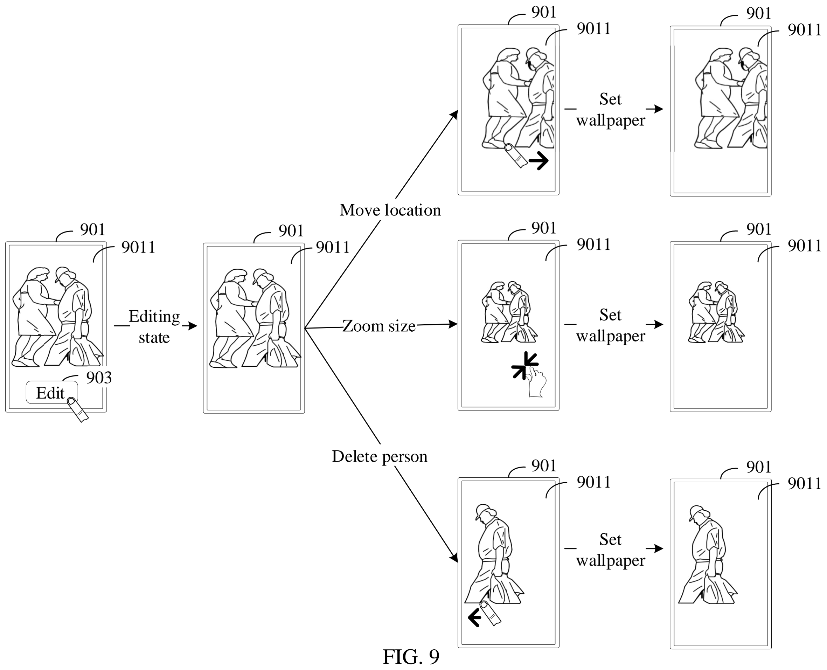

FIG. 9 is a diagram of interface interaction in a wallpaper setting method according to an embodiment of this application. A foldable screen device 901 in FIG. 9 may be a horizontally foldable device. An outer screen of the foldable screen device 901 in a folded state is shown as a screen 9011 in FIG. 9. FIG. 9 shows an example in which the foldable screen device 901 cuts a corresponding wallpaper image for the screen 9011 and previews the wallpaper image on the screen 9011. In an interface interaction process, the foldable screen device 901 may display an edit button 903 on the screen 9011, and a user may enter an editing state by tapping the button 903.

In the editing state, the user can adjust the wallpaper image. As shown in FIG. 9, the adjusting, by the user, the wallpaper image may include operations such as moving an image location, zooming in or out the image, or deleting a subject in the image.

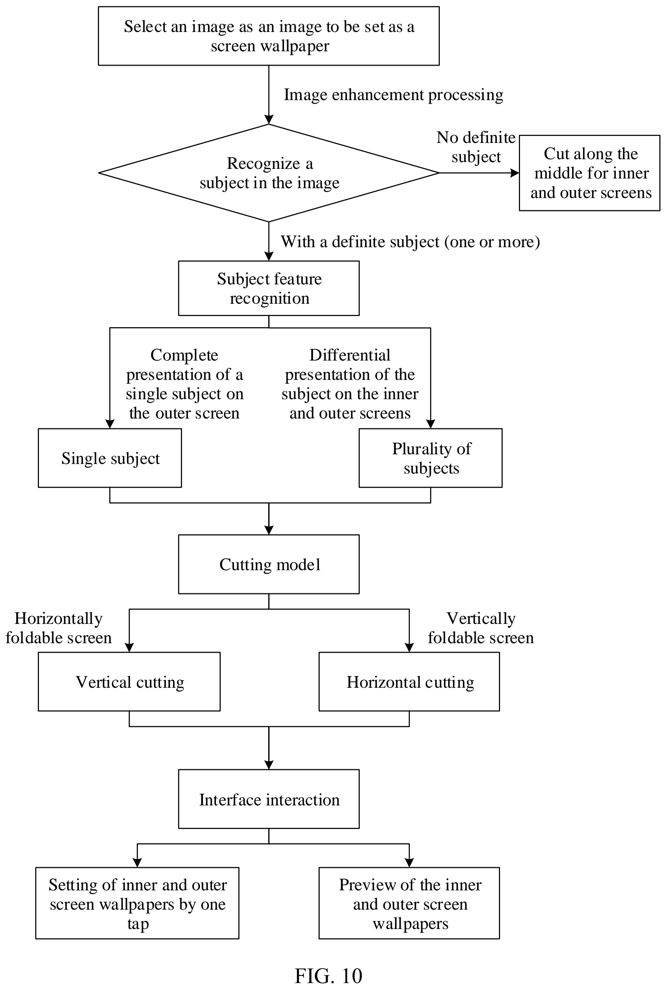

With reference to the wallpaper setting procedures shown in FIG. 4 to FIG. 9, FIG. 10 is a schematic flowchart of a wallpaper setting method for a foldable screen device according to an embodiment of this application. According to the procedure shown in FIG. 10, the foldable screen device may set screen wallpapers of an inner screen and an outer screen based on different quantities of subjects in an image and different folding manners of the foldable screen device, and four cases are separately described. The following provides detailed descriptions.

According to the procedure shown in FIG. 10, a user may select an image as an image to be set as a screen wallpaper. The foldable screen device may perform image enhancement processing on the image, to increase an image resolution and expand a resolution of an image edge. Then, the foldable screen device may recognize a subject in the image. A method used by the foldable screen device to recognize the subject may include but is not limited to an artificial intelligence large model, texture feature analysis, and the like. If there is no definite subject in the image, the foldable screen device may separately cut corresponding wallpaper images for the inner screen and the outer screen in a middle cutting manner. If there is a definite subject in the image, the foldable screen device may recognize a feature of the subject, and further determine information such as a type and a quantity of the subject and a location of each subject in the image.

As shown in FIG. 10, in a case in which the image includes only a single subject, the foldable screen device may separately cut the image by using different cutting models based on a folding manner of the foldable screen device. In an example, if the foldable screen device is a horizontally foldable device, the foldable screen device may cut the image in a vertical cutting manner; or if the foldable screen device is a vertically foldable device, the foldable screen device may cut the image in a horizontal cutting manner. For a process in which the foldable screen device cuts the image to obtain a wallpaper image that adapts to each screen, references may be made to the description of the foregoing embodiments, and details are not described herein again.

On the basis of obtaining wallpaper images through cutting, the foldable screen device may implement preview of wallpapers of the inner screen and the outer screen through interface interaction. After the user completes adjustment of the wallpaper images, the foldable screen device may complete wallpaper setting of the inner screen and the outer screen by one tap under an operation of the user.

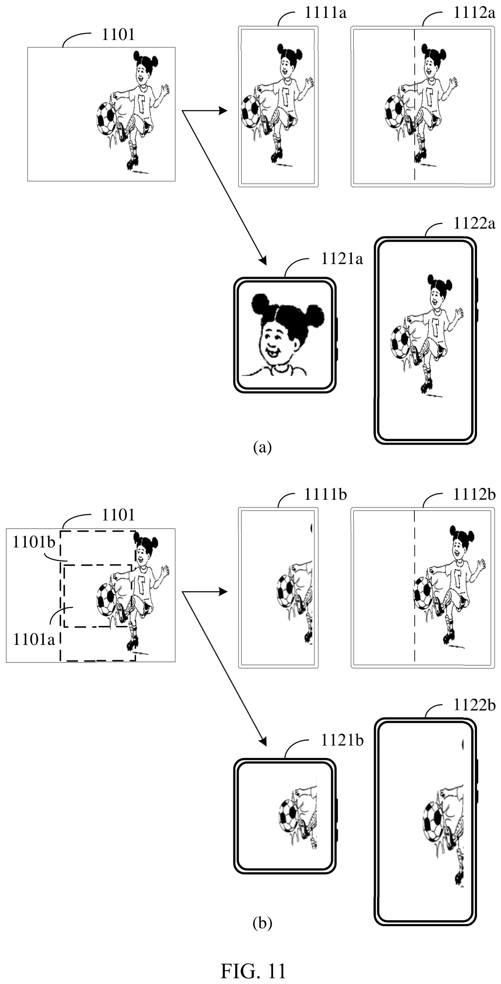

FIG. 11 is a comparison diagram of a wallpaper setting effect according to an embodiment of this application. FIG. 11 shows an example of separately cutting an image for a horizontally foldable device and a vertically foldable device and setting images obtained through cutting as wallpapers of an inner screen and an outer screen when the image includes only a single subject, and a comparison diagram of setting wallpapers of an inner screen and an outer screen of a horizontally foldable device and a vertically foldable device in a conventional technology.

(a) in FIG. 11 shows an example of effects obtained after an outer-screen wallpaper image and an inner-screen wallpaper image of a horizontally foldable device are respectively obtained and wallpaper setting is completed and an example of effects obtained after an outer-screen wallpaper image and an inner-screen wallpaper image of a vertically foldable device are obtained and wallpaper setting is completed, by cutting a single subject in an image by using the method provided in this embodiment of this application. An outer screen and an inner screen of the horizontally foldable device may be shown as a screen 1111a and a screen 1112a in (a) in FIG. 11, and an outer screen and an inner screen of the vertically foldable device may be shown as a screen 1121a and a screen 1122a in (a) in FIG. 11. When an image 1101 is cut according to the method provided in this embodiment of this application, a subject in the image 1101 may be first recognized, and then the image 1101 is cut based on a location of the subject in the image and size information of each screen, to obtain a corresponding wallpaper image. It can be seen from (a) in FIG. 11 that, regardless of the horizontally foldable device or the vertically foldable device, in a folded state and an unfolded state, both the outer-screen wallpaper image and the inner-screen wallpaper image include a complete subject in the original image 1101. (b) in FIG. 11 shows an example of obtaining an inner-screen wallpaper image and an outer-screen wallpaper image of a horizontally foldable device and an example of obtaining an inner-screen wallpaper image and an outer-screen wallpaper image of a vertically foldable device, by cutting an image by using a cutting method in a conventional technology. An outer screen and an inner screen of the horizontally foldable device may be shown as a screen 1111b and a screen 1112b in (b) in FIG. 11, and an outer screen and an inner screen of the vertically foldable device may be shown as a screen 1121b and a screen 1122b in (b) in FIG. 11. The screen 1111a and the screen 1111b are a same screen, the screen 1112a and the screen 1112b are a same screen, the screen 1121a and the screen 1121b are a same screen, and the screen 1122a and the screen 1122b are a same screen. When the image 1101 is cut based on a conventional technology, the foldable screen device performs cutting along the middle of the image 1101 for the screen 1111b, that is, cuts a region 1101b in the image 1101, to obtain a corresponding wallpaper image. The foldable screen device also performs cutting along the middle of the image 1101 for the screen 1121b, that is, cuts a region 1101a in the image 1101, to obtain a corresponding wallpaper image. It can be seen from (b) in FIG. 11 that, for a same image, the inner-screen wallpaper image in the unfolded state includes a complete subject in the original image. However, in the conventional technology, the foldable screen device cuts the image in a middle cutting manner, the subject in the original image is cut from the middle, and the obtained outer-screen wallpaper image of the horizontally foldable device in the folded state destroys integrity of the subject, which severely affects a setting effect of an outer-screen wallpaper. In addition, when the vertically foldable device cuts a same image, the subject in the outer-screen wallpaper image in the folded state and the subject in the inner-screen wallpaper image in the unfolded state of the vertically foldable device are both destroyed.

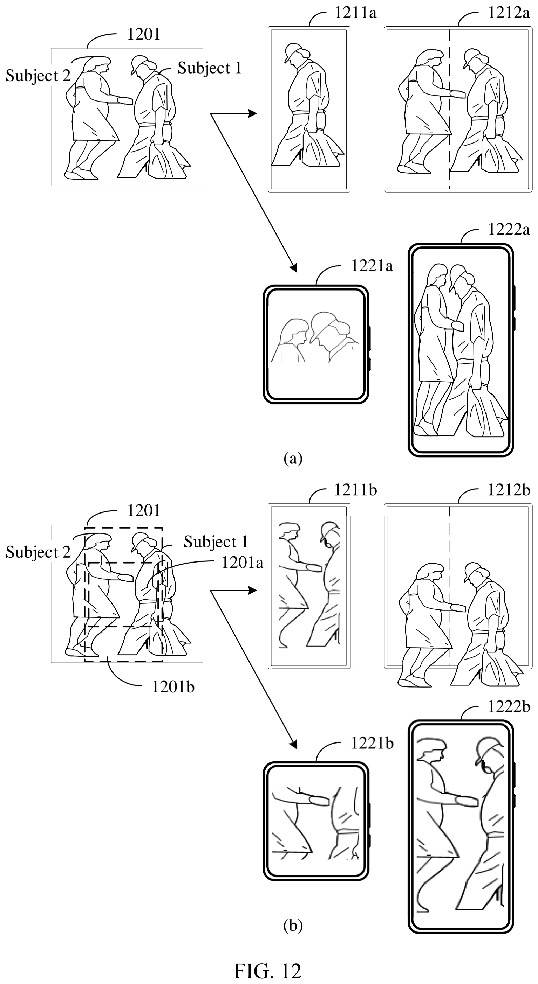

FIG. 12 is a comparison diagram of another wallpaper setting effect according to an embodiment of this application. FIG. 12 shows an example of separately cutting an image for a horizontally foldable device and a vertically foldable device and setting images obtained through cutting as wallpapers of an inner screen and an outer screen when the image includes a plurality of subjects, and a comparison diagram of setting wallpapers of an inner screen and an outer screen of a horizontally foldable device and a vertically foldable device in a conventional technology.

(a) in FIG. 12 shows an example of effects obtained after an outer-screen wallpaper image and an inner-screen wallpaper image of a horizontally foldable device and an outer-screen wallpaper image and an inner-screen wallpaper image of a vertically foldable screen device are respectively obtained and wallpaper setting is completed, by cutting a plurality of subjects in an image by using the method provided in this embodiment of this application. An outer screen and an inner screen of the horizontally foldable device are respectively a screen 1211a and a screen 1212a in (a) in FIG. 12, and an outer screen and an inner screen of the vertically foldable device are respectively a screen 1221a and a screen 1222a in (a) in FIG. 12. An image 1201 used in (a) in FIG. 12 includes two subjects, that is, a subject 1 and a subject 2, and the subject 1 and the subject 2 are horizontally arranged side by side in the image 1201. It can be seen from (a) in FIG. 12 that, after the image 1201 is cut according to the method provided in this embodiment of this application, and a wallpaper image obtained through cutting is set as a wallpaper of a corresponding screen, in a folded state, the outer-screen wallpaper image of the horizontally foldable device includes an image with the complete subject 1 in the original image; and in an unfolded state, the inner-screen wallpaper image includes an image with the complete subject 1 and the complete subject 2 in the original image. In addition, in the folded state, the outer-screen wallpaper image of the vertically foldable device includes an image with subject parts of the subject 1 and the subject 2 in the original image, that is, includes face parts of the subject 1 and the subject 2 in the image 1201; and in the unfolded state, the inner-screen wallpaper image includes an image with the complete subject 1 and subject 2 in the original image. (b) in FIG. 12 shows an example of obtaining an inner-screen wallpaper image and an outer-screen wallpaper image of a horizontally foldable device and an example of obtaining an inner-screen wallpaper image and an outer-screen wallpaper image of a vertically foldable device, by cutting an image by using a cutting method in a conventional technology.

An outer screen and an inner screen of the horizontally foldable device may be shown as a screen 1211b and a screen 1212b in (b) in FIG. 12, and an outer screen and an inner screen of the vertically foldable device may be shown as a screen 1221b and a screen 1222b in (b) in FIG. 12. The screen 1211a and the screen 1211b are a same screen, the screen 1212a and the screen 1212b are a same screen, the screen 1221a and the screen 1221b are a same screen, and the screen 1222a and the screen 1222b are a same screen. When the image 1201 is cut based on a conventional technology, the foldable screen device performs cutting along the middle of the image 1201 for the screen 1211b, that is, cuts a region 1201b in the image 1201, to obtain a corresponding wallpaper image. The foldable screen device performs cutting along the middle of the image 1201 based on size information of the screen 1221b for the screen 1221b, that is, cuts a region 1201a in the image 1201 to obtain a corresponding wallpaper image. It can be seen from (b) in FIG. 12 that, for the same image 1201 shown in (a) in FIG. 12, after a wallpaper is cut and set for the horizontally foldable device, the inner-screen wallpaper image in the unfolded state includes an image with the complete subject 1 and subject 2 in the original image 1201. However, in the conventional technology, the foldable screen device cuts the image in a middle cutting manner. When a wallpaper image is cut for the outer screen, the subject 1 and the subject 2 that are horizontally arranged side by side in the original image 1201 are cut from the middle of the image, and the obtained outer-screen wallpaper image in the folded state includes only a part of each image of the subject 1 and the subject 2. The outer-screen wallpaper image destroys integrity of the subject 1 and the subject 2 in the original image, which severely affects a setting effect of an outer-screen wallpaper. In addition, for the vertically foldable device, for the same image 1201 shown in (a) in FIG. 12, both the inner-screen wallpaper image in the unfolded state of the vertically foldable device and the outer-screen wallpaper image in the folded state include only some images of the subject 1 and the subject 2 in the original image, and the images are obtained by cutting the original image in a middle cutting manner. It can be seen from (b) in FIG. 12 that, both the outer-screen wallpaper image and the inner-screen wallpaper image that are obtained by cutting according to the conventional technology destroy integrity of the subject 1 and the subject 2 in the original image.

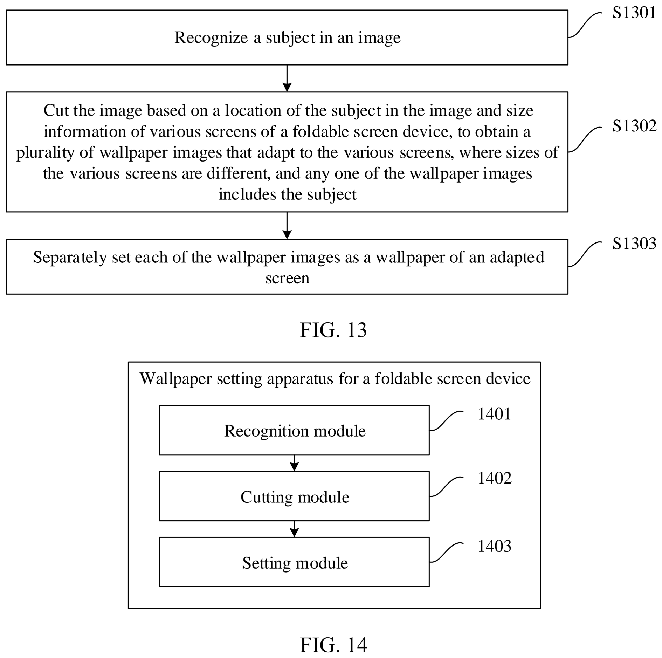

Based on the foregoing embodiments, FIG. 13 is a diagram of a wallpaper setting method for a foldable screen device according to an embodiment of this application. The method may include the following steps S1301 to S1303.

S1301: Recognize a subject in an image.

The method may be applied to a foldable screen device, and the foldable screen device may be an electronic device having the hardware structure shown in FIG. 1. The foldable screen device may include a plurality of screens, where at least one screen is foldable. For example, the foldable screen device may include an inner screen and an outer screen, where the inner screen may be foldable. Based on different folding directions, foldable screen devices may be classified into a horizontally foldable device and a vertically foldable device. The vertically foldable device may be shown as the foldable screen device 202 in FIG. 2. An outer screen of the vertically foldable device in a folded state may be shown as the outer screen 2021 in FIG. 2, and an inner screen in an unfolded state may be shown as the inner screen 2022 in FIG. 2. The horizontally foldable device may be shown as the foldable screen device 302 in FIG. 3. An outer screen of the horizontally foldable device in a folded state may be shown as the outer screen 3021 in FIG. 3, and an inner screen in an unfolded state may be shown as the inner screen 3022 in FIG. 3.

The image in this embodiment of this application may be an image used as a wallpaper of each screen of the foldable screen device, and the foldable screen device may obtain a wallpaper image of each screen by cutting the image. The image may be an image determined from images stored in the foldable screen device, or may be an image captured by a user in real time by using the foldable screen device, or may be an image received from another device by using various communication technologies.

Before setting the wallpaper of each screen, the foldable screen device may recognize the subject in the image. There may be only one or more subjects in the image. When there are a plurality of subjects in the image, the plurality of subjects may be subjects of a same type, or may be subjects of different types. For example, the image includes two subjects, and both the subjects are persons; or one of the two subjects is a person, and the other is an animal or a plant. The plurality of subjects may have corresponding priorities. When types of the subjects in the image are the same, the priorities of the plurality of subjects may be the same. When the image includes a plurality of different types of subjects, priorities of the different types of subjects may be different.

S1302: Cut the image based on a location of the subject in the image and size information of various screens of the foldable screen device, to obtain a plurality of wallpaper images that adapt to the various screens, where sizes of the various screens are different, and any one of the wallpaper images includes the subject.

After recognizing the subject in the image, the foldable screen device may cut the image based on the location of the subject in the image, to ensure that each wallpaper image obtained through cutting includes the subject in the image. In an example, the wallpaper image obtained through cutting including the subject may be including a target feature including the subject, for example, a complete feature of the subject, or a complete feature of a subject part of the subject.

When cutting the subject in the image, the foldable screen device may further cut the subject based on size information of each screen of the foldable screen device, so that a size of each wallpaper image obtained through cutting can adapt to one screen, that is, each wallpaper image obtained through cutting has a same aspect ratio as an adapted screen.

In a possible implementation of this embodiment of this application, the foldable screen device may determine, based on the location of the subject in the image, an image that is in the image and that includes the subject. Specifically, the foldable screen device may determine a central point of the subject based on the location of the subject in the image, and then determine, based on the determined central point, a region that is in the image and that includes a complete feature of the subject as an image region that needs to be retained. For example, as shown in FIG. 5, a region in which the subject 5011 in the image 501 is located is the region 501a, and the region 501a may be used as an image region that needs to be retained when the foldable screen device cuts the image 501.

Then, the foldable screen device may cut the image based on size information of the screens, to obtain a plurality of wallpaper images that adapt to the screens. For example, the foldable screen device may obtain the wallpaper images 5011a and 5011b by cutting the image 501 in FIG. 5 based on the size information of each screen, where the wallpaper image 5011a is a wallpaper image that adapts to the screen 5021 of the foldable screen device 502, and the wallpaper image 5011b is a wallpaper image that adapts to the screen 5022.

Generally, folding manners of different types of foldable screen devices are different. For example, folding manners of some foldable screen devices are horizontal folding, and folding manners of some other foldable screen devices are vertical folding. Different folding manners may correspond to different cutting directions. A cutting direction corresponding to horizontal folding may be vertical cutting, and a cutting direction corresponding to vertical folding may be horizontal cutting.

Therefore, when cutting the image, the foldable screen device may first determine a folding manner of the foldable screen device, and cut the image based on a cutting direction corresponding to the folding manner, to obtain a plurality of wallpaper images. Specifically, if the folding manner of the foldable screen device is horizontal folding, the image may be cut in a vertical cutting manner to obtain a wallpaper image that has a same aspect ratio as an adapted screen; or if the folding manner of the foldable screen device is vertical folding, the image may be cut in a horizontal cutting manner to obtain a wallpaper image that has a same aspect ratio as the adapted screen.

In a possible implementation of this embodiment of this application, the screens of the foldable screen device include a first screen and a second screen. For example, the first screen may be an outer screen of the foldable screen device, and the second screen may be an inner screen of the foldable screen device. A size of the first screen is usually less than a size of the second screen. When a wallpaper image is cut for the first screen, a complete feature of the subject may not be completely cut because the size of the first screen is relatively small. Therefore, the foldable screen device may determine a location of a subject part of the subject in the image region, and then cut the image based on the size information of the first screen to obtain a first wallpaper image that includes the subject part of the subject and adapts to the first screen. Generally, the subject may include a plurality of parts, different subjects include different parts, and priorities of different parts may also be different. When the image is cut to retain the subject part of the subject, the subject part may be a part with a highest priority. For example, if the subject is a person, a face part may be the subject part of the subject. For example, in FIG. 5, the subject 5011 is a person, and a corresponding subject part is a face part of the person. The foldable screen device may cut the image to obtain the wallpaper image 5011a, and the wallpaper image 5011a is an image that retains the face part of the subject 5011.

In another possible implementation of this embodiment of this application, the image may alternatively include a plurality of subjects. For example, the image includes a first subject and a second subject, the foldable screen device may include a first screen and a second screen, and a size of the first screen is less than a size of the second screen. When cutting a wallpaper image for each screen of the foldable screen device, the foldable screen device may separately determine priorities of the first subject and the second subject. If the priority of the first subject is higher than the priority of the second subject, the foldable screen device may cut the image based on a location of the first subject in the image and the size information of each screen of the foldable screen device, to obtain the first wallpaper image that adapts to the first screen, and cut the image to obtain the second wallpaper image that adapts to the second screen. When cutting is performed based on such a cutting solution, the first wallpaper image obtained through cutting may include the first subject with a highest priority in a plurality of subjects. For example, with reference to the priorities of the different subjects shown in FIG. 4, if the image includes both a person and a plant, because a priority of the person is higher than a priority of the plant, when the wallpaper image is cut for the first screen, the obtained first wallpaper image should include an image with the person. In an example, if the size of the first screen is relatively small, when cutting the image based on the size information of the first screen, the foldable screen device cannot completely cut the image to obtain an image with a plurality of subjects. For example, the foldable screen device cannot cut the image based on the size information of the first screen, to obtain an image including both the person and the plant. The foldable screen device may cut only the subject person with a highest priority, to obtain the first wallpaper image including the person. If the foldable screen device can completely cut the image based on the size information of the first screen to obtain an image including the plurality of subjects, for example, can cut the image to obtain an image including both the person and the plant, the foldable screen device may cut the person and the plant to obtain the first wallpaper image including the person and the plant. In this way, regardless of which manner is used for cutting, the obtained first wallpaper image can include the first subject with a highest priority.

In a specific implementation process, the foldable screen device may determine, based on the location of the first subject in the image, a first image region including the first subject, and then cut the image based on size information of the first screen to obtain the first wallpaper image including the first image region, so that the first wallpaper image obtained through cutting has a same aspect ratio as the first screen.

In another possible implementation, the foldable screen device may determine a ratio deviation between the size of the first screen and a size of the first image region. The ratio deviation may indicate whether the size of the first screen matches the size of the first image region. If the ratio deviation is greater than a preset deviation value, it indicates that if the image is cut based on the size of the first screen, the first wallpaper image obtained through cutting may not include the complete feature of the first subject. In this case, the foldable screen device may determine a location of the subject part of the first subject in the first image region, and cut the first image region based on the size information of the first screen, to obtain the first wallpaper image including the subject part of the first subject. That is, the foldable screen device cuts the first image region, to retain only a main feature of the subject in the first wallpaper image obtained through cutting.

In still another possible implementation of this embodiment of this application, there may be a plurality of first subjects, that is, there are a plurality of subjects with a highest priority in the image. For example, the image includes a plurality of person images. In this case, the foldable screen device may determine a first target subject from the plurality of first subjects based on a folding manner, and then determine, based on the location of the first target subject in the image, a region that is in the image and that includes a target feature of the first target subject as the first image region that needs to be retained. The region including the target feature may be a region in which an image reflecting the main feature of the first target subject is located. The foldable screen device cuts the image to obtain the first wallpaper image that includes the target feature and that adapts to the first screen. In an example, the folding manner of the foldable screen device is horizontal folding, and the foldable screen device is unfolded from right to left when being adjusted from the folded state to the unfolded state. If the plurality of first subjects in the image are arranged side by side, the foldable screen device may determine the first subject arranged on the right side as the first target subject. In this way, the first wallpaper image obtained through cutting may include only a subject arranged on the right side or a target feature of the subject, and the second wallpaper image may include the plurality of subjects at the same time. When the user uses the foldable screen device, in a process in which the foldable screen device is adjusted from the folded state to the unfolded state, an effect that a subject in the wallpaper changes from a single subject in an outer-screen wallpaper to a plurality of subjects in an inner-screen wallpaper may be presented, thereby enhancing user experience.

For the second screen, the foldable screen device may determine a second image region based on locations of the first subject and the second subject in the image, so that the second image region includes the first subject and the second subject. Then, the foldable screen device may cut the image based on the size information of the second screen, to obtain the second wallpaper image including the second image region. The second wallpaper image and the second screen have a same aspect ratio.

S1303: Separately set each of the wallpaper images as a wallpaper of an adapted screen.

After the wallpaper images that respectively adapt to the various screens are obtained through cutting, the foldable screen device may separately set the wallpaper images as wallpapers of adapted screens. For example, the foldable screen device may set the wallpaper image 5011a in FIG. 5 as a wallpaper of the adapted screen 5021, and set the wallpaper image 5011b as a wallpaper of the adapted screen 5022.

In a possible implementation of this embodiment of this application, after obtaining the wallpaper image of each screen through cutting, the foldable screen device may further preview each wallpaper image on an adapted screen, so that the user can view an effect of setting the wallpaper and adjust the wallpaper image. The user can adjust the wallpaper image by using an interaction instruction on each screen. When receiving an interaction instruction for any previewed wallpaper image, the foldable screen device may adjust the previewed wallpaper image according to the interaction instruction, where the adjustment may include moving a location and zooming a size of the wallpaper image, deleting a person in the wallpaper image, and the like. After the adjustment is completed, the foldable screen device may set each adjusted wallpaper image as the wallpaper of the adapted screen, and complete setting of wallpapers of a plurality of screens by one tap.

In this embodiment of this application, the subject in the image is recognized, and then the image is separately cut based on the location of the subject in the image and the size information of the various screens of the foldable screen device, to obtain the plurality of wallpaper images. Because each wallpaper image is obtained by cutting the subject in the image based on size information of a screen, it can be ensured that the wallpaper image obtained through cutting includes the subject in the original image, and size information of each wallpaper image adapts to size information of a corresponding screen. According to this embodiment of this application, a problem in the conventional technology that integrity of a subject in an image is easily damaged when a screen of any size information is cut along a middle of the image is solved, a possibility that effects of a wallpaper image finally presented on an inner screen and an outer screen are relatively different is reduced, and aesthetics and uniformity of screen wallpapers of a foldable screen device are improved.

In embodiments of this application, functional modules of the foldable screen device may be obtained through division based on the foregoing method examples. For example, each functional module may be obtained through division based on each corresponding function, or one or more functions may be integrated into one functional module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

Corresponding to the foregoing embodiments, FIG. 14 is a structural block diagram of a wallpaper setting apparatus for a foldable screen device according to an embodiment of this application. The apparatus may be applied to the foldable screen device in the foregoing embodiments. The apparatus may specifically include the following modules: a recognition module 1401, a cutting module 1402, and a setting module 1403.

The recognition module 1401 is configured to recognize a subject in an image.

The cutting module 1402 is configured to separately cut the image based on a location of the subject in the image and size information of various screens of the foldable screen device, to obtain a plurality of wallpaper images that adapt to the various screens, where the size information of the various screens is different, and any one of the wallpaper images includes the subject.

The setting module 1403 is configured to separately set each of the wallpaper images as a wallpaper of an adapted screen.

It should be noted that all related content of the steps in the foregoing method embodiments may be cited in function description of corresponding functional modules. Details are not described herein again.

An embodiment of this application further provides a foldable screen device. The foldable screen device may be the foldable screen device in embodiments. The foldable screen device includes a memory, a processor, and a computer program that is stored in the memory and that is capable of running on the processor. When the processor executes the computer program, the wallpaper setting method for a foldable screen device in the foregoing embodiments may be implemented.

An embodiment of this application further provides a computer-readable storage medium. The computer-readable storage medium stores computer instructions. When the computer instructions are run on a foldable screen device, the foldable screen device is enabled to perform the foregoing related method steps, to implement the wallpaper setting method for a foldable screen device in the foregoing embodiments.

An embodiment of this application further provides a computer program product. When the computer program product is run on a computer, the computer is enabled to perform the foregoing related steps, to implement the wallpaper setting method for a foldable screen device in the foregoing embodiments.

An embodiment of this application further provides a chip. The chip may be a processor, or the chip includes a processor. The processor may be a general-purpose processor, or may be a dedicated processor. The processor is configured to support a foldable screen device in performing the foregoing related steps, to implement the wallpaper setting method for a foldable screen device in the foregoing embodiments.

Optionally, the chip further includes a transceiver. The transceiver is configured to receive control by the processor, and is configured to support the foldable screen device in performing the foregoing related steps, to implement the wallpaper setting method for a foldable screen device in the foregoing embodiments.

Optionally, the chip may further include a storage medium.

The chip may be implemented by using the following circuits or devices: one or more field programmable gate arrays (field programmable gate array, FPGA), a programmable logic device (programmable logic device, PLD), a controller, a state machine, a gate logic, a discrete hardware component, any other proper circuit, or any combination of circuits that can perform the functions described throughout this application.

In conclusion, the foregoing descriptions are merely specific implementations of this application, but are not intended to limit the protection scope of this application. Any variation or replacement within the technical scope disclosed in this application shall fall within the protection scope of this application.

## Claims

1. A wallpaper setting method for a foldable screen device, comprising:
recognizing a subject in an image;
cutting the image based on a location of the subject in the image and size information of various screens of the foldable screen device, to obtain a plurality of wallpaper images that adapt to the various screens, wherein the size information of the various screens is different, and any one of the wallpaper images comprises the subject; and
separately setting each of the wallpaper images as a wallpaper of an adapted screen.

2. The method according to claim 1, wherein the cutting the image based on the location of the subject in the image and the size information of the various screens of the foldable screen device, to obtain the plurality of wallpaper images that adapt to the various screens comprises:
determining, based on the location of the subject in the image, an image region that is in the image and that comprises the subject; and
cutting the image based on the size information of the various screens of the foldable screen device to obtain the plurality of wallpaper images that adapt to the various screens, wherein any one of the wallpaper images comprises at least the subject in the image region.

3. The method according to claim 2, wherein the cutting the image based on the size information of the various screens of the foldable screen device to obtain the plurality of wallpaper images that adapt to the various screens comprises:
determining a folding manner of the foldable screen device, wherein the folding manner comprises horizontal folding or vertical folding, and any folding manner is corresponding to one cutting direction; and
cutting the image based on a cutting direction corresponding to the folding manner to obtain a plurality of wallpaper images, wherein each wallpaper image obtained through cutting has a same aspect ratio as an adapted screen.

4. The method according to claim 3, wherein the cutting the image based on the cutting direction corresponding to the folding manner to obtain the plurality of wallpaper images comprises:
if the folding manner of the foldable screen device is horizontal folding, cutting the image in a vertical cutting manner to obtain a wallpaper image that has a same aspect ratio as an adapted screen; or
if the folding manner of the foldable screen device is vertical folding, cutting the image in a horizontal cutting manner to obtain a wallpaper image that has a same aspect ratio as an adapted screen.

5. The method according to any one of claims 1 to 4, wherein the various screens of the foldable screen device comprise a first screen whose size information is less than a preset value, and the cutting the image based on the location of the subject in the image and the size information of the various screens of the foldable screen device, to obtain the plurality of wallpaper images that adapt to the various screens further comprises:
determining a location of a subject part of the subject in the image; and
cutting the image based on the size information of the first screen to obtain a first wallpaper image that comprises the subject part of the subject and adapts to the first screen.

6. The method according to claim 5, wherein the subject comprises a plurality of parts, different parts have different priorities, and the subject part has a highest priority.

7. The method according to any one of claims 1 to 6, wherein after the recognizing the subject in the image, the method further comprises:
determining a central point of the subject; and
determining, based on the central point, a region that is in the image and that comprises a target feature of the subject as an image region that needs to be retained.

8. The method according to claim 7, wherein after the determining, based on the central point, the region that is in the image and that comprises the target feature of the subject as the image region that needs to be retained, the method further comprises:
displaying, on any screen of the foldable screen device, prompt box information for the image region that needs to be retained, wherein the prompt box information prompts adjustment of the image region that needs to be retained; and
when an operation for the prompt box information is received, adjusting, based on the operation, a size and/or a location of the image region that needs to be retained.

9. The method according to claim 1, wherein the subject comprises a first subject and a second subject, the foldable screen device comprises a first screen and a second screen, a size of the first screen is less than a size of the second screen, and the cutting the image based on the location of the subject in the image and the size information of the various screens of the foldable screen device, to obtain the plurality of wallpaper images that adapt to the various screens comprises:
separately determining priorities of the first subject and the second subject; and
when the priority of the first subject is higher than the priority of the second subject, cutting the image based on a location of the first subject in the image and the size information of the various screens of the foldable screen device, to obtain a first wallpaper image that adapts to the first screen, and cutting the image to obtain a second wallpaper image that adapts to the second screen, wherein the first wallpaper image comprises the first subject.

10. The method according to claim 9, wherein the cutting the image based on the location of the first subject in the image and the size information of the various screens of the foldable screen device, to obtain the first wallpaper image that adapts to the first screen comprises:
determining, based on the location of the first subject in the image, a first image region comprising the first subject; and
cutting the image based on size information of the first screen to obtain the first wallpaper image comprising the first image region, wherein the first wallpaper image and the first screen have a same aspect ratio.

11. The method according to claim 10, wherein the cutting the image based on the size information of the first screen to obtain the first wallpaper image comprising the first image region comprises:
determining a ratio deviation between the size of the first screen and a size of the first image region; and
if the ratio deviation is greater than a preset deviation value, determining a location of a subject part of the first subject in the first image region; and cutting the first image region based on the size information of the first screen to obtain the first wallpaper image comprising the subject part of the first subject.

12. The method according to claim 10 or 11, wherein there are a plurality of first subjects, and the determining, based on the location of the first subject in the image, the first image region comprising the first subject comprises:
determining a first target subject from the plurality of first subjects based on a folding manner of the foldable screen device; and
determining, based on a location of the first target subject in the image, a region that is in the image and that comprises a target feature of the first target subject as the first image region that needs to be retained.

13. The method according to any one of claims 9 to 12, wherein the cutting the image to obtain the second wallpaper image that adapts to the second screen comprises:
determining a second image region based on locations of the first subject and the second subject in the image, wherein the second image region comprises the first subject and the second subject; and
cutting the image based on size information of the second screen to obtain the second wallpaper image comprising the second image region, wherein the second wallpaper image and the second screen have a same aspect ratio.

14. The method according to any one of claims 1 to 13, wherein the separately setting each of the wallpaper images as the wallpaper of the adapted screen comprises:
separately previewing each of the wallpaper images on the adapted screen;
when an interaction instruction for any previewed wallpaper image is received, adjusting the previewed wallpaper image according to the interaction instruction; and
setting each adjusted wallpaper image as the wallpaper of the adapted screen.

15. A foldable screen device, wherein the foldable screen device comprises a plurality of screens, resolutions of the screens are different, the foldable screen device further comprises a memory, a processor, and a computer program that is stored in the memory and that is capable of running on the processor, and when executing the computer program, the processor implements the wallpaper setting method for a foldable screen device according to any one of claims 1 to 14.

16. A computer-readable storage medium, wherein the computer-readable storage medium comprises a memory and a processor, and the processor executes a computer program stored in the memory, to implement the wallpaper setting method for a foldable screen device according to any one of claims 1 to 14.
